# EUROPEAN PATENT APPLICATION

(11) **EP 4 447 607 A1**
(43) Date of publication of application: **16.10.2024**
(21) Application number: 23737144.8
(22) Date of filing: 06.01.2023
(51) Int. Cl.: H04W 76/25, H04W 76/18

(54) **COMMUNICATION METHOD, COMMUNICATION DEVICE AND COMMUNICATION SYSTEM**

(30) Priority: 10.01.2022 CN 202210023783; 27.05.2022 CN 202210585646
(71) Applicant: Huawei Technologies Co., Ltd., Shenzhen, Guangdong 518129 (CN)
(72) Inventor: FANG, Yuzhe, Shenzhen, Guangdong 518129 (CN); PENG, Wenjie, Shenzhen, Guangdong 518129 (CN)
(74) Representative: Grünecker Patent- und Rechtsanwälte PartG mbB
(86) International application number: PCT/CN2023/070960
(87) International publication number: WO 2023/131282

(57) **Abstract**

This application provides a communication method, a communication device, and a communication system, to avoid interruption in data communicated by a remote terminal. The method includes: receiving radio resource control release information sent by a first network device, where the radio resource control release information indicates to release a first radio resource control connection between a first terminal and the first network device; and sending first indication information to a second terminal, where the first terminal is a relay device for the second terminal to access the first network device, and the first indication information indicates to release a sidelink between the first terminal and the second terminal, indicates that the first radio resource control connection is released, or indicates that a state of the first radio resource control connection is a connection failure state.

## Description

This application claims priority to Chinese Patent Application No. 202210023783.X, filed with the China National Intellectual Property Administration on January 10, 2022 and entitled "COMMUNICATION METHOD, COMMUNICATION APPARATUS, AND COMMUNICATION SYSTEM", which is incorporated herein by reference in its entirety.

This application claims priority to Chinese Patent Application No. 202210585646.5, filed with the China National Intellectual Property Administration on May 27, 2022 and entitled "COMMUNICATION METHOD, COMMUNICATION APPARATUS, AND COMMUNICATION SYSTEM", which is incorporated herein by reference in its entirety.

### TECHNICAL FIELD

This application relates to the communication field, and more specifically, to a communication method, a communication apparatus, and a communication system.

### BACKGROUND

A relay (relay) terminal may serve as a relay device to relay data communicated between a remote (remote) terminal and a network device. In some cases, the network device may release a radio resource control (radio resource control, RRC) connection between the relay terminal and the network device, causing interruption in data communicated by the remote terminal.

### SUMMARY

This application provides a communication method, a communication apparatus, and a communication system, to avoid interruption in data communicated by a remote terminal.

According to a first aspect, a communication method is provided, including: receiving radio resource control release information sent by a first network device, where the radio resource control release information indicates to release a first radio resource control connection between a first terminal and the first network device; and sending first indication information to a second terminal, where the first terminal is a relay device for the second terminal to access the first network device, and the first indication information indicates at least one of the following: indicating to release a sidelink between the first terminal and the second terminal, indicating that the first radio resource control connection is released, or indicating that a state of the first radio resource control connection is a connection failure state.

When the first radio resource control connection between the first terminal serving as the relay device and the first network device is released, the first terminal sends the first indication information to the second terminal serving as a remote device. In this way, the remote terminal can perform subsequent processing based on the first indication information, to avoid interruption in data communicated by the remote terminal.

In some possible implementations, the method further includes: establishing a second radio resource control connection to a second network device, where the second radio resource control connection is used by the second terminal to access the second network device.

When the first radio resource control connection between the first terminal serving as the relay device and the first network device is released, the first terminal establishes the second radio resource control connection to the second network device, so that the second terminal accesses the second network device through the second radio resource control connection. This can avoid interruption in data communicated by the second terminal.

In some possible implementations, the method further includes: receiving second indication information sent by the second terminal, where the second indication information indicates to maintain the sidelink.

When receiving the second indication information that is sent by the second terminal and that indicates to maintain the sidelink, the first terminal establishes the second radio resource control connection to the second network device. In other words, the establishment of the second radio resource control connection depends on a sidelink maintenance response that is sent by the second terminal to the first indication information, to avoid establishing the second radio resource control connection in an invalid case, and reduce resource occupation.

In some possible implementations, the establishing a second radio resource control connection to a second network device includes: when the sidelink is not disconnected at a detection time point, establishing an RRC connection to the second network device, where the detection time point includes a time point of first duration since the first indication information is sent.

That the sidelink is not disconnected at the detection time point may be understood as a sidelink maintenance response of the second terminal to the first indication information. In other words, the establishment of the second radio resource control connection depends on a sidelink maintenance response that is sent by the second terminal to the first indication information, to avoid establishing the second radio resource control connection in an invalid case, and reduce resource occupation.

In some possible implementations, the method further includes: receiving the radio resource control release information when the first terminal meets a handover condition and a session that belongs to the first terminal does not exist between the first terminal and the first network device.

For example, the handover condition may be that at least one measurement event is met. After an RRC connection is established between the first terminal and the first network device, the first network device may send at least one measurement event to the first terminal. The first terminal device may periodically or aperiodically perform measurement. When any one or more of the at least one measurement event is met, the first terminal may send a measurement report to the first network device. When receiving the measurement report, the first network device may determine that the handover condition is met.

That the first network device may send the at least one measurement event to the first terminal may include one or more of the following events: Signal quality of a serving cell becomes lower than a corresponding threshold; signal quality of a neighboring cell starts to be higher than the signal quality of the serving cell by a specific offset; the signal quality of the neighboring cell becomes higher than a corresponding threshold; the signal quality of the serving cell becomes lower than a threshold 1 and the signal quality of the neighboring cell becomes higher than a threshold 2; the signal quality of the neighboring cell starts to be higher than signal quality of a secondary cell (secondary cell, SCell) by a specific offset; signal quality of an inter-RAT (inter radio access technology, inter-RAT) neighboring cell becomes higher than a corresponding threshold; and signal quality of a primary cell (primary cell, PCell) becomes lower than the threshold 1 and the signal quality of the inter-RAT neighboring cell becomes higher than the threshold 2.

When the first terminal meets the handover condition and a session that belongs to the first terminal does not exist between the first terminal and the first network device, the first network device may send the radio resource control release information to the first terminal, and release the first radio resource control connection to the first terminal.

In some possible implementations, the method further includes: determining a connection state of the first radio resource control connection; and sending state indication information to the second terminal, where the state indication information includes first state information, second state information, or third state information, the first state information indicates that the connection state is an establishing state, the second state information indicates that the connection state is an established state, and the third state information indicates that the connection state is an establishment failure state.

The first terminal sends the state indication information to the second terminal, to indicate the connection state of the first radio resource control connection, so that an event related to the first radio resource control connection does not need to be indicated, thereby reducing information redundancy.

It should be understood that, after the first terminal establishes the second radio resource control connection to the second network device, the first terminal may send state indication information to the second terminal, to indicate a connection state of the second radio resource control connection. In other words, the state indication information indicates a radio resource control connection between the first terminal and a network device serving the first terminal.

In some possible implementations, the determining a connection state of the first radio resource control connection includes: when the first terminal is being handed over, the first radio resource control connection is being established, or the first radio resource control connection on which a radio link failure occurs is being recovered, determining that the connection state is the establishing state; or when the first terminal is handed over, the first radio resource control connection is established, or the first radio resource control connection on which a radio link failure occurs is recovered, determining that the connection state is the established state; or when the first terminal device fails to be handed over, the first radio resource control connection fails to be established, a radio link failure occurs on the first radio resource control connection, the first radio resource control connection on which the radio link failure occurs fails to be recovered, or the first radio resource control connection is released, determining that the connection state is the establishment failure state.

When states of radio resource control connections between the first terminal and the network device are the same, a plurality of events related to the first radio resource control connection may be indicated by using same information, thereby reducing a quantity of bits needed by the information, and reducing information redundancy.

According to a second aspect, a communication method is provided, where the method includes: determining a connection state of a first radio resource control connection between a first terminal and a first network device; and sending state indication information to a second terminal, where the state indication information includes first state information, second state information, or third state information, the first state information indicates that the connection state is an establishing state, the second state information indicates that the connection state is an established state, and the third state information indicates that the connection state is an establishment failure state; and the first terminal is a relay device for the second terminal to access the first network device.

The first terminal sends the state indication information to the second terminal, to indicate the connection state of the first radio resource control connection, so that an event related to the first radio resource control connection does not need to be indicated, thereby reducing information redundancy.

In some possible implementations, the determining a connection state of a first radio resource control connection between a first terminal and a first network device includes: when the first terminal is being handed over, the first radio resource control connection is being established, or the first radio resource control connection on which a radio link failure occurs is being recovered, determining that the connection state is the establishing state; or when the first terminal is handed over, the first radio resource control connection is established, or the first radio resource control connection on which a radio link failure occurs is recovered, determining that the connection state is the established state; or when the first terminal device fails to be handed over, the first radio resource control connection fails to be established, a radio link failure occurs on the first radio resource control connection, the first radio resource control connection on which the radio link failure occurs fails to be recovered, or the first radio resource control connection is released, determining that the connection state is the establishment failure state.

In some possible implementations, the determining a connection state of a first radio resource control connection between a first terminal and a first network device includes: when receiving radio resource control release information sent by the first network device, determining that the connection state is the establishment failure state, where the radio resource control release information indicates to release the first radio resource control connection.

In some possible implementations, the method further includes: establishing a second radio resource control connection to a second network device, where the second radio resource control connection is used by the second terminal to access the second network device.

In some possible implementations, the method further includes: receiving second indication information sent by the second terminal, where the second indication information indicates to maintain a sidelink.

In some possible implementations, the establishing a second radio resource control connection to a second network device includes: when the sidelink is not disconnected at a detection time point, establishing an RRC connection to the second network device, where the detection time point includes a time point of first duration since first indication information is sent.

In some possible implementations, the radio resource control release information is received when the first terminal meets a handover condition and a session that belongs to the first terminal does not exist between the first terminal and the first network device.

According to a third aspect, a communication method is provided. The method includes: determining that a first terminal meets a handover condition and a session that belongs to the first terminal does not exist between the first terminal and a first network device, where the first terminal is a relay device for a second terminal to access the first network device, and a first radio resource control connection exists between the first terminal and the first network device; and sending radio resource control release information to the first terminal, where the radio resource control release information indicates to release the first radio resource control connection between the first terminal and the first network device.

When determining that the first terminal meets the handover condition and the session that belongs to the first terminal does not exist, the first network device may indicate the first terminal to release the radio resource control connection, so that the first terminal may send first indication information to the second terminal, and the second terminal may perform subsequent processing based on the first indication information, to avoid interruption in data communicated by the second terminal.

In some possible implementations, the method further includes: receiving a measurement report from the first terminal, where the measurement report includes information indicating signal quality obtained by the first terminal through measurement; and determining, based on the measurement report, that the first terminal meets the handover condition.

The first network device may determine, based on the measurement report from the first terminal, whether the first terminal meets the handover condition, to determine whether to send handover indication information to the first terminal.

In some possible implementations, the method further includes: releasing the first radio resource control connection between the first terminal and the first network device.

After sending the radio resource control release information to the first terminal, the first network device may release the first radio resource control connection to the first terminal.

According to a fourth aspect, a communication method is provided. The method includes: determining whether a session that belongs to a first terminal exists between the first terminal and a first network device, where the first terminal is a relay device for a second terminal to access the first network device; and when the session that belongs to the first terminal does not exist, sending a first radio resource control reconfiguration message to the first terminal, where the first radio resource control reconfiguration message includes information indicating at least one unmeasurable cell and/or at least one measurable cell covered by the first network device.

When the session that belongs to the first terminal does not exist, the first network device may indicate the first terminal to measure only a cell covered by the first network device, so that the first terminal may be handed over from a current serving cell to a cell with better signal quality covered by the first network device. This avoids interruption in data communicated by the second terminal through the first terminal.

In some possible implementations, the method further includes: when the session that belongs to the first terminal exists, sending a second radio resource control reconfiguration message to the first terminal, where the second radio resource control reconfiguration message includes information indicating a cell covered by the first network device and/or another cell, and the another cell is a cell other than the cell covered by the first network device.

When the session that belongs to the first terminal exists, the first network device may send the second radio resource control reconfiguration message to the first terminal, so that the first terminal may perform signal measurement based on the second radio resource control reconfiguration message, to determine whether a cell with better signal quality exists.

In some possible implementations, the second radio resource control reconfiguration message includes any one or more of the following: at least one measurement event, a measurable cell whitelist, or an unmeasurable cell blacklist, where the measurable cell whitelist includes at least one measurable cell within or beyond coverage of the first network device, and the unmeasurable cell blacklist includes at least one unmeasurable cell.

The first network device may send the second radio resource control reconfiguration message to the first terminal, so that when the session that belongs to the first terminal exists, the first terminal may be handed over to a network with better signal quality.

In some possible implementations, the method further includes: receiving a first measurement report from the first terminal, where the first measurement report is determined based on the first radio resource control reconfiguration message or the second radio resource control reconfiguration message.

The first network device may send different radio resource control reconfiguration messages to the first terminal, and may further receive the first measurement report from the first terminal, to determine whether to send handover indication information to the first terminal.

In some possible implementations, the method further includes: receiving a second measurement report from the first terminal, where the second measurement report includes information indicating signal quality obtained by the first terminal through measurement; and determining, based on the second measurement report, that the first terminal meets a handover condition.

The first network device may determine, based on the second measurement report from the first terminal, whether the first terminal meets the handover condition, to determine whether to send the handover indication information to the first terminal. After receiving the second measurement report, the first network device may alternatively determine whether a session that belongs to the first terminal exists, and send the first radio resource control reconfiguration message or the second radio resource control reconfiguration message to the first terminal.

According to a fifth aspect, a communication method is provided. The method includes: when a session that belongs to a first terminal does not exist between the first terminal and a first network device, receiving a first radio resource control reconfiguration message from the first network device, where the first radio resource control reconfiguration message includes information indicating at least one unmeasurable cell and/or at least one measurable cell covered by the first network device, and the first terminal is a relay device for a second terminal to access the first network device; and performing signal measurement based on the first radio resource control reconfiguration message.

When the session that belongs to the first terminal does not exist, the first terminal may perform signal measurement based on the first radio resource control reconfiguration message, so that a case in which the second terminal cannot transmit data to the first network device through the first terminal because the first terminal is disconnected from the first network device can be avoided.

In some possible implementations, when the session that belongs to the first terminal exists, a second radio resource control reconfiguration message is received from the first network device, where the second radio resource control reconfiguration message includes information indicating a cell covered by the first network device and/or another cell, and the another cell is a cell other than the cell covered by the first network device; and signal measurement is performed based on the second radio resource control reconfiguration message.

When the session that belongs to the first terminal exists, the first terminal may perform signal measurement based on the first radio resource control reconfiguration message, to determine whether a cell with better signal quality exists.

In some possible implementations, the second radio resource control reconfiguration message includes any one or more of the following: at least one measurement event, a measurable cell whitelist, or an unmeasurable cell blacklist, where the measurable cell whitelist includes at least one measurable cell within or beyond coverage of the first network device, and the unmeasurable cell blacklist includes at least one unmeasurable cell.

The first terminal may perform signal measurement based on the first radio resource control reconfiguration message, so that when the session that belongs to the first terminal exists, the first terminal is handed over to a network with better signal quality.

In some possible implementations, the method further includes: sending a first measurement report to the first network device, where the first measurement report is determined based on the first radio resource control reconfiguration message or the second radio resource control reconfiguration message.

The first terminal may perform signal measurement based on different radio resource control reconfiguration messages, and send different measurement reports to the first network device, so that the first network device can obtain information about signal quality of each cell.

In some possible implementations, the method further includes: before receiving the first radio resource control reconfiguration message or the second radio resource control reconfiguration message from the first network device, sending a second measurement report to the first network device, where the second measurement report includes information indicating signal quality obtained by the first terminal through measurement.

The first terminal may send the second measurement report to the first network device, to report, to the first network device, the signal quality obtained through measurement, and enable the first network device to determine to send the first radio resource control reconfiguration message or the second radio resource control reconfiguration message. Alternatively, the first terminal may send the second measurement report to the first network device, so that the first network device can determine not to send a radio resource control reconfiguration message and not to hand over the first terminal.

According to a sixth aspect, a communication apparatus is provided, including modules configured to perform the method according to any one of the first aspect, the second aspect, or the fifth aspect or the implementations thereof.

According to a seventh aspect, a communication apparatus is provided, including modules configured to perform the method according to any one of the third aspect or the fourth aspect or the implementations thereof.

According to an eighth aspect, a communication apparatus is provided, including at least one processor and a communication interface, where the communication interface is configured to perform information exchange between the communication apparatus and another communication apparatus, and when program instructions are executed by the at least one processor, the communication apparatus is enabled to perform the method according to any one of the first aspect, the second aspect, or the fifth aspect or the implementations thereof.

According to a ninth aspect, a communication apparatus is provided, including at least one processor and a communication interface, where the communication interface is configured to perform information exchange between the communication apparatus and another communication apparatus, and when program instructions are executed by the at least one processor, the communication apparatus is enabled to perform the method according to any one of the third aspect or the fourth aspect or the implementations thereof.

According to a tenth aspect, a communication system is provided, including a second terminal, the communication apparatus according to the sixth aspect or the eighth aspect, and the communication apparatus according to the seventh aspect or the ninth aspect.

According to an eleventh aspect, a computer-readable medium is provided. The computer-readable medium stores program code executed by a device, and the program code is for performing the method according to any one of the first aspect, the second aspect, the third aspect, the fourth aspect, or the fifth aspect or the implementations thereof.

According to a twelfth aspect, a computer program product including instructions is provided. When the computer program product is run on a computer, the computer is enabled to perform the method according to any one of the first aspect, the second aspect, the third aspect, the fourth aspect, or the fifth aspect or the implementations thereof.

According to a thirteenth aspect, a chip is provided. The chip includes a processor and a data interface, and the processor reads, through the data interface, instructions stored in a memory, to perform the method according to any one of the first aspect, the second aspect, the third aspect, the fourth aspect, or the fifth aspect or the implementations thereof.

Optionally, in an implementation, the chip may further include a memory, and the memory stores instructions. The processor is configured to execute the instructions stored in the memory, and when the instructions are executed, the processor is configured to perform the method according to any one of the first aspect, the second aspect, the third aspect, the fourth aspect, or the fifth aspect or the implementations thereof.

The chip may be specifically a field-programmable gate array (field-programmable gate array, FPGA) or an application-specific integrated circuit (application-specific integrated circuit, ASIC).

### BRIEF DESCRIPTION OF DRAWINGS

FIG. 1 is a diagram of a scenario of a communication manner between devices;
FIG. 2 is a schematic flowchart of a communication method;
FIG. 3 is a schematic flowchart of a communication method according to an embodiment of this application;
FIG. 4 is a schematic flowchart of another communication method according to an embodiment of this application;
FIG. 5 is a schematic flowchart of still another communication method according to an embodiment of this application;
FIG. 6 is a schematic flowchart of a communication method according to an embodiment of this application;
FIG. 7 is a schematic flowchart of another communication method according to an embodiment of this application;
FIG. 8 is a diagram of a structure of a communication apparatus according to an embodiment of this application;
FIG. 9 is a diagram of a structure of another communication apparatus according to an embodiment of this application;
FIG. 10 is a diagram of a structure of a communication apparatus according to an embodiment of this application;
FIG. 11 is a diagram of a structure of another communication apparatus according to an embodiment of this application; and
FIG. 12 is a diagram of a structure of still another communication apparatus according to an embodiment of this application.

### DESCRIPTION OF EMBODIMENTS

The following describes technical solutions of this application with reference to accompanying drawings.

Technical solutions in embodiments of this application may be applied to various communication systems such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, or a new radio (new radio, NR) system.

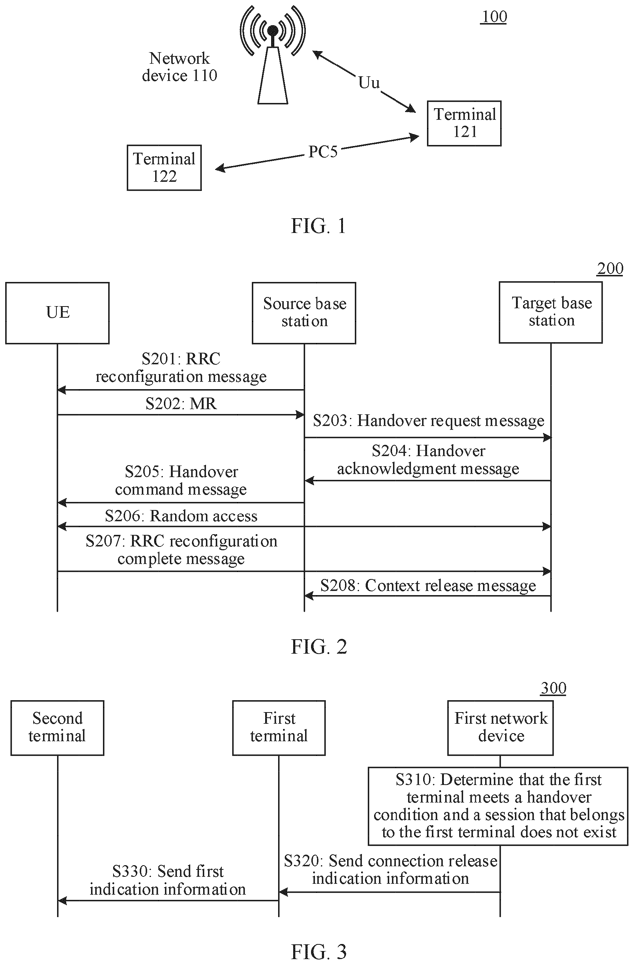

FIG. 1 is a diagram of a scenario of a communication manner between devices. In the scenario 100 shown in FIG. 1, there are mainly two types of communication interfaces: a communication interface (a Uu interface) between a terminal 121 and a network device 110 and a communication interface (a PC5 interface) between the terminal 121 and a terminal 122. The Uu interface is used for communication between user equipment and a base station or a road side unit, and the PC5 interface is used for sidelink communication between terminals. On the Uu interface, a link on which a terminal sends data to the base station is referred to as an uplink (uplink), and a link on which the terminal receives data sent by the base station is referred to as a downlink (downlink). A communication interface between terminals is referred to as the PC5 interface. On the PC5 interface, a link for data transmission between the terminals is referred to as a sidelink (sidelink) or a direct link. The sidelink is generally used in a scenario such as a device to device (device to device, D2D) scenario in which direct communication can be performed between devices. In this scenario, data transmission between devices does not need to be performed through the base station. Vehicle to everything (vehicle to everything, V2X) communication may be considered as a special case of D2D communication.

On the Uu interface, transmission of data and radio resource control (radio resource control, RRC) signaling is performed between the terminal and the base station through a radio bearer. A radio bearer for data transmission is referred to as a data radio bearer (data radio bearer, DRB), and a bearer for RRC signaling transmission is referred to as a signaling radio bearer (signaling radio bearer, SRB). A radio bearer includes a packet data convergence protocol (packet data convergence protocol, PDCP) entity and a radio link control (radio link control, RLC) bearer. An RLC bearer includes an RLC entity and a corresponding logical channel (Logical Channel, LCH). A configuration of the radio bearer is a configuration of the PDCP entity, the RLC entity, and the logical channel of the radio bearer. The configuration of the radio bearer needs to ensure a quality of service (quality of service, QoS) requirement of a service whose transmission is performed through the radio bearer. On the Uu interface, the radio bearer is configured by the network device for the terminal.

On the PC5 interface, transmission of data and RRC signaling also needs to be performed between the terminals through a radio bearer. The radio bearer on the PC5 interface may be referred to as a sidelink radio bearer (sidelink radio bearer, SL RB). In a long term evolution (long term evolution, LTE) V2X system, the radio bearer on the PC5 interface is separately established by a transmit end terminal and a receive end terminal, and a configuration of the radio bearer is predefined in a standard or is determined by the transmit end terminal and the receive end terminal.

The terminal may communicate with the network device. The terminal may be an access terminal, a subscriber unit, a subscriber station, a mobile station, a mobile console, a remote station, a remote terminal, a mobile device, a subscriber terminal, user equipment (user equipment, UE), a wireless communication device, a user agent, or a user apparatus. The user equipment may alternatively be a cellular phone, a cordless telephone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal in a 5G network, user equipment in any form in a future network, or the like. This is not specifically limited in this embodiment of this application.

The network device in this embodiment of this application may be a device that communicates with the terminal and is configured to enable the terminal to access a radio access network (radio access network, RAN). The network device may also be sometimes referred to as an access network device, an access network node, or a base station. It may be understood that in systems using different radio access technologies, names of devices having functions of the base station may be different. For ease of description, in this embodiment of this application, apparatuses that provide a wireless communication access function for the terminal are collectively referred to as a network device. The network device may be a base transceiver station (base transceiver station, BTS) in a global system for mobile communications (global system for mobile communications, GSM) or a code division multiple access (code division multiple access, CDMA) system, may be a NodeB (NodeB, NB) in a wideband code division multiple access (wideband code division multiple access, WCDMA) system, or may be an evolved NodeB (evolved NodeB, eNB, or eNodeB) in an LTE system, or may be a radio controller in a cloud radio access network (cloud radio access network, CRAN) scenario. Alternatively, the network device may be a relay station, an access point, a vehicle-mounted device, a wearable device, a network device in a 5G network, a network device in a future evolved PLMN network, or one antenna panel or a group (including a plurality of antenna panels) of antenna panels of a base station in a 5G system, or may be a network node that forms a next generation node base station (next generation Node Base station, gNB) or a transmission point, for example, a baseband unit (baseband unit, BBU) or a distributed unit (distributed unit, DU). This is not limited in this embodiment of this application.

In embodiments of this application, the terminal or the network device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not specifically limited in embodiments of this application, provided that a program that records code for the method provided in embodiments of this application can be run to perform communication according to the method provided in embodiments of this application. For example, the method provided in embodiments of this application may be executed by a terminal or a network device, or may be executed by a function module that is in the terminal or the network device and that can invoke and execute the program, for example, a chip or a processor.

In addition, aspects or features of this application may be implemented as a method, an apparatus, or a product that uses standard programming and/or engineering technologies. For example, the computer-readable medium may include but is not limited to: a magnetic storage component (for example, a hard disk, a floppy disk or a magnetic tape), an optical disc (for example, a compact disc (compact disc, CD) or a digital versatile disc (digital versatile disc, DVD)), a smart card and a flash memory component (for example, erasable programmable read-only memory (erasable programmable read-only memory, EPROM), a card, a stick, or a key drive). In addition, various storage media described in this specification may represent one or more devices and/or other machine-readable media that are configured to store information. The term "machine readable media" may include but is not limited to a radio channel, and various other media that can store, contain and/or carry instructions and/or data.

To improve network performance, D2D communication supports user equipment-to-network relay (UE-to-network relay, U2N Relay). A relay (relay) terminal, as a relay device, may relay data whose transmission is performed between a remote (remote) terminal and a network device. In the scenario 100, the terminal 121 may be used as a relay (relay) terminal, and the terminal 121 may be used as a remote terminal.

FIG. 2 is a schematic flowchart of a communication method. The method 200 includes S201 to S208.

S201: A source base station sends a first RRC reconfiguration message to a terminal. The first RRC reconfiguration message is used to configure at least one measurement event for the terminal to measure a signal of each base station.

The first RRC reconfiguration message may be used to configure at least one measurement event. For example, one of the at least one measurement event may be that a signal strength of a serving cell is lower than a threshold and a signal of a target cell is higher than a threshold.

An RRC connection is established between the terminal and the source base station. The serving cell is one of at least one cell covered by the source base station. The target cell may be one of at least one cell covered by a target base station.

The terminal may perform measurement based on the at least one measurement event. For example, one of the at least one measurement event may be that a signal strength of the source base station is less than a threshold and a signal strength of the target base station is greater than or equal to a threshold. In this case, the terminal may measure a signal strength of each base station.

For example, the source base station may send the first RRC reconfiguration message to the terminal after establishing the RRC connection to the terminal. The terminal may periodically perform measurement, and determine whether a measurement result meets any one of the at least one measurement event.

S202: When the measurement result meets the any measurement event, the terminal sends a measurement report (measurement report, MR) to the source base station.

The MR may include a measurement event that is met by the measurement result and that is in the at least one measurement event. The MR may further include a target cell or a target base station that enables the measurement result to meet the measurement event. The target cell may be a cell covered by the target base station.

S203: The source base station sends a handover request message to the target base station based on the MR sent by the terminal.

After receiving the MR sent by the terminal, the source base station may send the handover request message to the target base station when the terminal has a service.

S204: The target base station may send a handover acknowledgment message to the source base station.

The target base station determines, based on a quantity of other terminals connected to the target base station and the like, whether to allow access of the terminal. If the target base station determines to allow the access of the terminal, the target base station may send the handover acknowledgment message to the source base station.

The handover acknowledgment message may include related information of the target cell and a related configuration parameter needed by the terminal to access the target cell. The related information of the target cell may include one or more of a physical cell identifier (physical cell identifier, PCI) of the target cell, frequency information corresponding to the target cell, a cell radio network temporary identifier (cell radio network temporary identifier, C-RNTI) that is of the target cell and that is allocated by the target base station to the terminal, and the like. The related configuration parameter needed by the terminal to access the target cell includes one or more of random access channel (random access channel, RACH) resource information (for example, a dedicated RACH resource and/or a common RACH resource) needed for accessing the target cell, a security-related algorithm of the target base station, and the like.

S205: The source base station may send a handover command message to the terminal.

The handover command message (or may be understood as a second RRC reconfiguration message) may include the related information of the target cell and the related configuration parameter needed by the terminal to access the target cell.

S206: The terminal initiates random access to the target base station based on the handover command, and establishes an RRC connection to the target base station.

After disconnecting the RRC connection to the source base station, the terminal may initiate random access to the target base station, and establish the RRC connection to the target base station after accessing the target base station.

S207: The terminal sends an RRC reconfiguration complete message to the target base station.

The terminal may send the RRC reconfiguration complete message to the target base station when the RRC connection between the terminal and the target base station is successfully established.

S208: The target base station sends an RRC connection release message to the source base station.

After receiving a context release message, the source base station may release a context of the terminal.

According to the method 200, the terminal may complete handover (handover, HO) between cells.

When a base station releases an RRC connection to a relay terminal, data of a remote terminal may be interrupted. For example, when the terminal in FIG. 2 is a relay terminal and no protocol data unit (protocol data unit, PDU) session of the terminal exists between the terminal and the source base station, after receiving the MR, the source base station does not perform S203. Consequently, data of a remote terminal may be interrupted.

To resolve a data interruption problem that is of a remote terminal and that occurs in the scenario in FIG. 2 or another scenario, an embodiment of this application provides a communication method.

FIG. 3 is a schematic flowchart of a communication method according to an embodiment of this application. The method 300 includes S310 to S330. An apparatus that performs step S320 and step S330 may be a first terminal, or may be a component such as a chip in the first terminal.

S310: A first network device determines that the first terminal meets a handover condition and a session that belongs to the first terminal does not exist.

The first network device may determine whether the first terminal meets the handover condition, and may further determine whether a session that belongs to the first terminal exists between the first network device and the first terminal. The first terminal is a relay device for a second terminal to access the first network device. A first radio resource control connection (that is, a first RRC connection) exists between the first terminal and the first network device.

For example, the handover condition may be that at least one measurement event is met. After an RRC connection is established between the first terminal and the first network device, the first network device may send at least one measurement event to the first terminal. The first terminal device may periodically or aperiodically perform measurement. When any one or more of the at least one measurement event is met, the first terminal may send a measurement report to the first network device. When receiving the measurement report, the first network device may determine that the handover condition is met.

For example, the measurement report may indicate at least one measurement event that is met.

That the first network device may send the at least one measurement event to the first terminal may include one or more of the following events: Signal quality of a serving cell becomes lower than a corresponding threshold; signal quality of a neighboring cell starts to be higher than the signal quality of the serving cell by a specific offset; the signal quality of the neighboring cell becomes higher than a corresponding threshold; the signal quality of the serving cell becomes lower than a threshold 1 and the signal quality of the neighboring cell becomes higher than a threshold 2; the signal quality of the neighboring cell starts to be higher than signal quality of a secondary cell (secondary cell, SCell) by a specific offset; signal quality of an inter-RAT (inter radio access technology, inter-RAT) neighboring cell becomes higher than a corresponding threshold; and signal quality of a primary cell (primary cell, PCell) becomes lower than the threshold 1 and the signal quality of the inter-RAT neighboring cell becomes higher than the threshold 2.

When the first network device determines that the first terminal meets the handover condition, the first network device may further determine whether the session that belongs to the first terminal exists. When the session that belongs to the first terminal does not exist, the first network device may send a connection release message to the first terminal. The connection release message indicates to release the first RRC connection between the first terminal and the first network device.

Before the first network device determines whether the first terminal meets the handover condition, the first network device may receive a measurement report from the first terminal. The measurement report includes information indicating signal quality obtained by the first terminal through measurement. The first network device may determine, based on the measurement report, whether the first terminal meets the handover condition.

After the first network device sends radio resource control release information to the first terminal, the first network device may further release the first radio resource control connection to the first terminal.

S320: Receive connection release indication information sent by the first network device.

The connection release indication information indicates to release a connection between the first terminal and the first network device.

The connection release indication information may be, for example, a radio resource control release message. The radio resource control release message indicates to release the first radio resource control connection between the first terminal and the first network device.

The connection release indication information may be carried in an RRC message sent by the first network device to the first terminal. In other words, before releasing the first radio resource control connection between the first terminal and the first network device, the first network device may send the connection release indication information to the first terminal through the first radio resource control connection.

When at least one of the following cases occurs, the first network device may release the first radio resource control connection, and send a radio resource control release message to the first terminal: network-side RRC connection release information is received, load of the first network device exceeds a preset value, higher-layer authentication fails, a lower-layer error (for example, a media access control (media access control, MAC) layer link failure or a radio link control (radio link control, RLC) layer link failure) occurs, radio link control is recovered and the session that belongs to the first terminal does not exist, a timer corresponding to the first radio resource control connection expires, message exchange performed through the first radio resource control connection fails, the handover condition is met and the session that belongs to the first terminal does not exist, and the like.

S330: Send first indication information to a second terminal, where the first terminal is a relay device for the second terminal to access the first network device, and the first indication information indicates at least one of the following: indicating to release a sidelink between the first terminal and the second terminal, indicating that the first radio resource control connection is released, or indicating that a state of the first radio resource control connection is a connection failure state.

The first indication information may be carried in an RRC message sent by the first terminal to the second terminal through the sidelink. The sidelink between the first terminal and the second terminal may be an RRC connection established between the first terminal and the second terminal. The RRC message sent by the first terminal to the second terminal through the sidelink may also be referred to as a PC5-RRC message.

The first indication information may be used as a field of the PC5-RRC message and is carried in the PC5-RRC message. Alternatively, the first indication information may be used as a PC5-RRC message.

According to the method 300, when a radio resource control connection between a first terminal serving as a relay device and a network device is released, first indication information is sent to a second terminal serving as a remote terminal, so that the second terminal can perform a subsequent operation based on the first indication information, to avoid data interruption.

The first indication information may indicate to release a sidelink between the first terminal and the second terminal. In this case, after receiving the first indication information, the second terminal may perform relay reselection, or may initiate random access to the network device, and establish an RRC connection to the network device.

The first indication information may further indicate that a first radio resource control connection is released, or indicate that a state of the first radio resource control connection is a connection failure state.

Compared with a specific event in which the first indication information indicates that the first radio resource control connection is released, that the first indication information indicates a state of a radio resource control connection can reduce redundancy of the first indication information.

Specifically, when a radio link failure (radio link failure, RLF) occurs on the radio resource control connection between the first terminal and the network device, radio resource control release information is received, the RLF fails to be recovered, an RRC connection fails to be established, a handover fails, or the like, the second terminal configured to provide a relay service for the second terminal and the network device may send third state information to the second terminal, to indicate a state of the radio resource control connection between the first terminal and the network device. Therefore, after receiving the third state information, the second terminal may perform relay reselection, or may initiate random access to the network device, and establish an RRC connection to the network device. The first terminal sends the third state information to the second terminal, so that different specific events related to a connection state of the radio resource control connection between the first terminal and the network device may be indicated by using same information, thereby reducing redundancy of the first indication information.

In some embodiments, after sending the first indication information, the first terminal may release the sidelink between the first terminal and the second terminal.

In some other embodiments, the first terminal may perform a subsequent operation based on a response of the second terminal to the first indication information.

When the response of the second terminal indicates to maintain the sidelink, the first terminal may establish a second radio resource control connection to a second network device. The second radio resource control connection is used by the second terminal to access the second network device. In other words, the first terminal reselects a network device for the second terminal, to provide a service for the second terminal.

After receiving the first indication information, the second terminal may send second indication information to the first terminal. The second indication information indicates to maintain the sidelink. The second indication information may be understood as a response of the second terminal to the first indication information. The first terminal receives the second indication information, that is, obtains the response that is of the second terminal and that indicates to maintain the sidelink.

After receiving the first indication information, the second terminal may disconnect or maintain the sidelink with the first terminal. The first terminal may detect the sidelink at a detection time point of first duration since the first indication information is sent. If a detection result at the detection time point is that the sidelink still exists, that is, the sidelink is not released by the second terminal, but is maintained by the second terminal, the first terminal obtains a response that is of the second terminal and that indicates to maintain the sidelink.

It should be understood that the first duration may be preset, may be determined by the second terminal and the first terminal through an agreement, or may be determined by the first terminal based on information such as communication quality of the sidelink. This is not limited in this embodiment of this application.

After the first terminal obtains the response that is of the second terminal and that indicates to maintain the sidelink, the first terminal may establish the second radio resource control connection to the second network device. On the contrary, if the first terminal does not receive the second indication information sent by the second terminal, or the sidelink at the detection time point has been released by the second terminal, the first terminal may no longer establish the second radio resource control connection to the second terminal.

That the first terminal does not receive the second indication information sent by the second terminal may mean that the first terminal does not receive, within second duration since the first indication information is sent, the second indication information sent by the second terminal. The second duration may be preset, may be determined by the second terminal and the first terminal through an agreement, or may be determined by the first terminal based on information such as communication quality of the sidelink.

For example, after S320, the first terminal may establish the second radio resource control connection to the second network device. The establishment of the second radio resource control connection may not depend on S330.

The second radio resource control connection is established, so that data interruption of the second terminal can be avoided.

In addition, the apparatus that performs the method 300 may determine a connection state of a radio resource control connection between the first terminal and the first network device, and send state indication information to the second terminal. The state indication information includes first state information, second state information, or third state information. The first state information indicates that the connection state is an establishing state, the second state information indicates that the connection state is an established state, and the third state information indicates that the connection state is an establishment failure state. The first terminal is a relay device for the second terminal to access the first network device.

Specifically, the establishing state indicates that a connection is being established or connection establishment is being performed. When the first terminal is being handed over, the radio resource control connection is being established, the radio resource control connection on which a radio link failure occurs is being recovered (Uu-RLF recovering), or the like, it is determined that the connection state is the establishing state.

The established state indicates that a connection has been established or the connection is established successfully. When the first terminal is handed over, the radio resource control connection is established, the radio resource control connection on which a radio link failure occurs is recovered (Uu-RLF recovered), or the like, it is determined that the connection state is the established state.

The establishment failure state indicates that a connection fails to be established or the connection is unavailable. When the first terminal device fails to be handed over (HO failure), the radio resource control connection fails to be established, a radio link failure occurs on the radio resource control connection, the radio resource control connection on which the radio link failure occurs fails to be recovered (Uu-RLF failure), the radio resource control connection is released, or the like, it is determined that the connection state is the establishment failure state.

For example, when radio resource control release information sent by the first network device is received, and the radio resource control release information indicates to release the radio resource control connection, it is determined that the connection state is the establishment failure state.

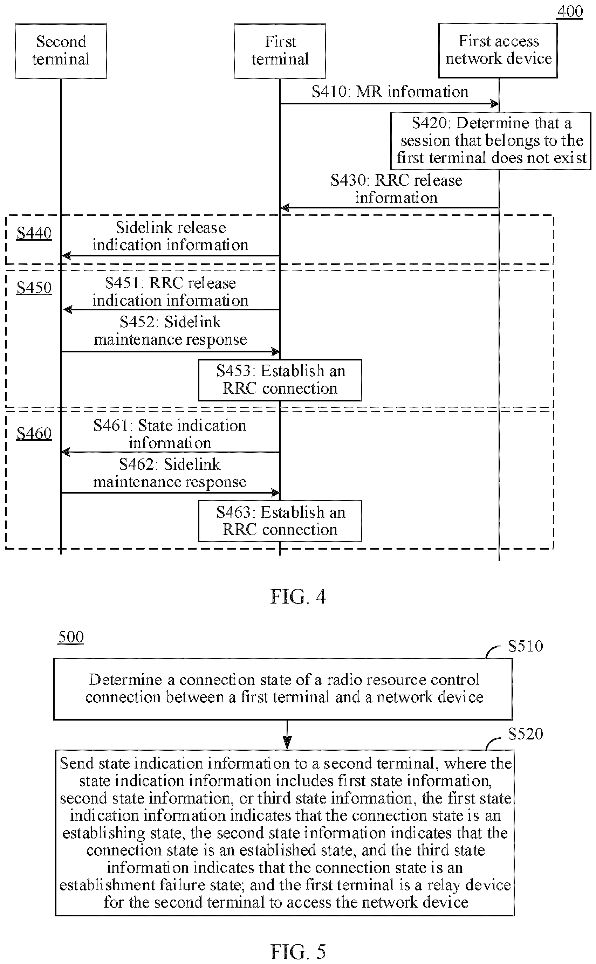

FIG. 4 is a schematic flowchart of a communication method according to an embodiment of this application. The communication method 400 includes S410 to S460.

An RRC connection is established between a first terminal and a first network device.

After the RRC connection is established between the first terminal and the first network device, the first network device may send at least one measurement event to the first terminal.

The first terminal detects a signal of each cell, and determines whether a detection result meets the at least one measurement event. If the detection result meets any measurement event, S410 may be performed.

S410: The first terminal sends a measurement report to the first network device.

For example, the measurement report may include a measurement event met by the first terminal.

S420: The first network device determines that a session that belongs to the first terminal does not exist.

The at least one measurement event may include at least one event of a measurement event A2, a measurement event A3, a measurement event A4, a measurement event A5, a measurement event A6, a measurement event B 1, and a measurement event B2.

The measurement event A2 is that signal quality of a serving cell becomes lower than a corresponding threshold.

The measurement event A3 is that signal quality of a neighboring cell starts to be higher than the signal quality of the serving cell by a specific offset.

The measurement event A4 is that the signal quality of the neighboring cell becomes higher than a corresponding threshold.

The measurement event A5 is that the signal quality of the serving cell becomes lower than a threshold 1 and the signal quality of the neighboring cell becomes higher than a threshold 2.

The measurement event A6 is that the signal quality of the neighboring cell starts to be higher than signal quality of a secondary cell (secondary cell, SCell) by a specific offset.

The measurement event B 1 is that signal quality of an inter-RAT (Inter-RAT) neighboring cell becomes higher than a corresponding threshold.

The measurement event B2 is that signal quality of a primary cell (primary cell, PCell) becomes lower than the threshold 1 and the signal quality of the inter-RAT neighboring cell becomes higher than the threshold 2.

It should be understood that both the primary cell and the secondary cell are cells covered by the first network device, and are configured to provide a service for the first terminal. The primary cell and the secondary cell correspond to different frequency bands. The neighboring cell is a cell other than the serving cell, and the serving cell is a cell covered by the first network device. The serving cell provides a service for the first terminal.

After receiving the measurement report, the first network device may determine whether the session of the first terminal exists. When the first network device determines that the session of the first terminal does not exist, the first network device may release an RRC context of the first terminal, and perform S430. The first network device may release the RRC context of the first terminal, that is, the first access network device disconnects the RRC connection from the first terminal.

When determining that the session that belongs to the first terminal does not exist, the first network device may determine whether a protocol data unit (protocol data unit, PDU) session that belongs to the first terminal exists. When the first network device determines that no PDU session of the first terminal exists, the first network device may perform S430, and disconnect the RRC connection from the first terminal.

S430: The first network device sends RRC release information to the first terminal. The RRC release information indicates that the first network device releases the RRC connection of the first terminal.

After receiving the RRC release information, the first terminal enters an RRC idle mode (RRC_IDLE), and may perform any one of S440, S450, and S460.

S440: The first terminal sends sidelink release indication information to a second terminal.

The sidelink release indication information indicates the second terminal to disconnect a sidelink connection from the first terminal.

After receiving the sidelink release indication information, the second terminal may disconnect the sidelink connection from the first terminal. In other words, the second terminal may release a context of a sidelink.

After disconnecting the sidelink connection from the first terminal, the second terminal may perform relay reselection or cell (re)selection. In other words, the second terminal may redetermine a relay terminal, or the second terminal may initiate random access to a second network device and establish an RRC connection to the second network device.

S450 includes S451 to S453.

S451: The first terminal may send Uu interface RRC release information to the second terminal.

The Uu interface RRC release information indicates that the RRC connection between the first terminal and the first network device has been disconnected. For example, the Uu interface RRC release information indicates that the first network device releases the RRC context of the first terminal.

After receiving the Uu interface RRC release information sent by the first terminal, the second terminal may release a sidelink with the first terminal.

Alternatively, the second terminal may maintain a sidelink with the first terminal, that is, maintain a connection to the first terminal.

In some embodiments, when determining to maintain the sidelink, the second terminal may send sidelink maintenance information to the first terminal.

S452: The first terminal obtains a sidelink maintenance response of the second terminal.

For example, that the first terminal receives the sidelink maintenance information sent by the second terminal may be understood as that the first terminal obtains the sidelink maintenance response of the second terminal.

For example, a timer may be set in the first terminal. The first terminal may start the timer when sending the Uu interface RRC release information. After the timer is started, timing ends after first duration. The first duration may be preset, may be determined by the second terminal and the first terminal through an agreement, or may be determined by the first terminal based on information such as communication quality of the sidelink. When the timing of the timer ends, the first terminal may determine whether the sidelink with the second terminal remains connected. When determining that the sidelink remains connected, the first terminal obtains the sidelink maintenance response of the second terminal. In other words, if the first terminal determines that the sidelink with the second terminal is not disconnected at a detection time point of preset duration since the Uu interface RRC release information is sent, the first terminal obtains the sidelink maintenance response of the second terminal.

S453: The first terminal establishes an RRC connection to the second network device.

After accessing the second network device, the first terminal may camp on a cell covered by the second network device.

It should be understood that the second network device may be the first network device, or may be a network device other than the first network device.

When the second network device is the first network device, the cell on which the first terminal camps after performing random access may be a cell different from a serving cell of the first terminal before S410.

After the first terminal establishes the RRC connection to the second network device, the first terminal, as a relay terminal of the second terminal, may relay data between the second terminal and the second network device.

After S451, if the first terminal does not obtain the sidelink maintenance response of the second terminal, the first terminal may release the sidelink with the second terminal.

S460 includes S461 to S463.

S461: The first terminal may send state indication information to the second terminal.

When an RRC connection state between the first terminal and a network device changes, the first terminal may send the state indication information to the second terminal.

The RRC connection state between the first terminal and the network device may be any one of an establishing state, an established state, or a failure state.

Before S410, an RRC connection state between the first terminal and the first network device is the established state. The first network device may send the RRC release information to the first terminal, and release the RRC connection to the first terminal. In S410, when receiving the RRC release information sent by the first network device, the first terminal may determine that the RRC connection state between the first terminal and the first network device changes to the failure state, and perform S461.

Alternatively, when receiving the RRC release information sent by the first network device, the first terminal may detect the RRC connection state between the first terminal and the first network device. When detecting that the RRC connection state between the first terminal and the first network device is the failure state, the first terminal may perform S461.

S462: The first terminal obtains a sidelink maintenance response of the second terminal.

Similar to S452, if the first terminal receives sidelink maintenance information sent by the second terminal, or if the first terminal determines that the sidelink with the second terminal is not disconnected at a detection time point of preset duration since the state indication information is sent in S461, the first terminal obtains the sidelink maintenance response of the second terminal. Then, the first terminal may perform S463.

S463: The first terminal establishes an RRC connection to the second network device.

After S461, if the first terminal does not obtain the sidelink maintenance response of the second terminal, the first terminal may release the sidelink with the second terminal.

Optionally, after S440, alternatively, the first terminal may not release the sidelink, and may establish the RRC connection to the second network device after obtaining the sidelink maintenance response of the second terminal.

FIG. 5 is a schematic flowchart of a communication method according to an embodiment of this application.

When a first terminal is a relay device for a second terminal to access a network device, the first terminal may send event information to the second terminal, to indicate an event related to a radio resource control connection between the first terminal and the network device. For example, after determining that an RLF occurs on the radio resource control connection to the network device, the first terminal may send event information to the second terminal, to indicate that the RLF occurs on the radio resource control connection. In other words, different time may correspond to different event information.

After receiving different event information, the second terminal may perform a same operation. For example, an event 1 is that the first terminal fails to be handed over, and an event 2 is that the RLF occurs on the radio resource control connection between the first terminal and the network device. Event information corresponding to the event 1 is different from that corresponding to the event 2. However, after the second terminal receives the event information corresponding to the event 1 and the event information corresponding to the event 2, operations performed by the second terminal may be both releasing a sidelink with the first terminal.

In other words, the first terminal sends the event information to the second terminal, to indicate the event related to the radio resource control connection between the first terminal and the network device. Because there is a large quantity of events related to the radio resource control connection between the first terminal and the network device, to distinguish between different event information, more bits (bit) are needed for the event information, causing information redundancy. To resolve the foregoing problem, an embodiment of this application may provide a communication method 500. The method 500 includes S510 and S520.

S510: Determine a connection state of the radio resource control connection between the first terminal and the network device.

Specifically, when the first terminal is being handed over, the radio resource control connection is being established, or the radio resource control connection on which a radio link failure occurs is being recovered, it may be determined that the connection state is the establishing state.

When the first terminal is handed over, the radio resource control connection is established, or the radio resource control connection on which a radio link failure occurs is recovered, it may be determined that the connection state is the established state.

When the first terminal device fails to be handed over, the radio resource control connection fails to be established, a radio link failure occurs on the radio resource control connection, the radio resource control connection on which the radio link failure occurs fails to be recovered, or the radio resource control connection is released, it may be determined that the connection state is the establishment failure state.

S520: Send state indication information to the second terminal, where the state indication information includes first state information, second state information, or third state information, the first state information indicates that the connection state is the establishing state, the second state information indicates that the connection state is the established state, and the third state information indicates that the connection state is the establishment failure state; and the first terminal is a relay device for the second terminal to access the network device.

For events corresponding to a same connection state of the radio resource control connection between the first terminal and the network device, operations of the second terminal may be the same. According to the method 500, the first terminal sends the state indication information to the second terminal, to indicate the connection state of the radio resource control connection between the first terminal and the network device. A quantity of connection states of the radio resource control connection is less than a quantity of events related to the radio resource control connection. Therefore, a quantity of bits of information can be reduced, information redundancy can be avoided, and processing of the first terminal and the second terminal is simpler.

It should be understood that the first terminal may periodically or aperiodically detect a state of the radio resource control connection between the first terminal and the network device, determine the connection state of the radio resource control connection between the first terminal and the network device, and send the state indication information to the second terminal.

Alternatively, when determining that the connection state of the radio resource control connection between the first terminal and the network device changes, the first terminal may send the state indication information to the second terminal.

Specifically, when receiving radio resource control release information sent by the first network device, the first terminal may determine that the connection state is the establishment failure state. The radio resource control release information indicates to release the radio resource control connection.

The radio resource control release information indicates that the connection state of the radio resource control connection changes.

After receiving the radio resource control release information sent by the first network device, the first terminal may establish a second radio resource control connection to a second network device. The second radio resource control connection is used by the second terminal to access the second network device.

For example, after receiving second indication information sent by the second terminal, the first terminal may establish the second radio resource control connection to the second network device. The second indication information indicates to maintain a sidelink.

The second indication information may be understood as response information of the first indication information.

For example, when the sidelink is not disconnected at a detection time point, the first terminal may establish an RRC connection to the second network device. The detection time point includes a time point of first duration since the first indication information is sent.

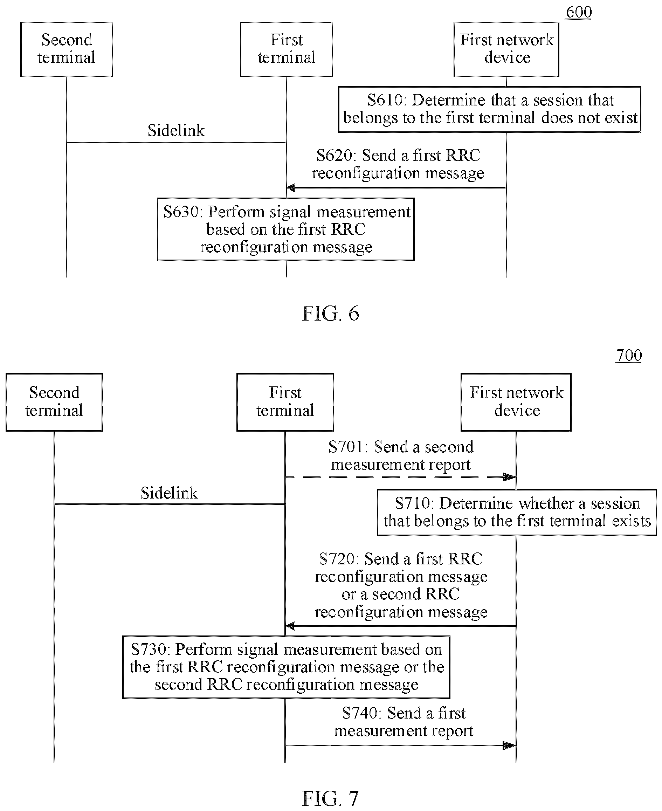

FIG. 6 is a schematic flowchart of a communication method according to an embodiment of this application. The communication method 600 includes S610 to S630.

S610: Determine that a session that belongs to a first terminal does not exist.

A first network device may determine whether the session that belongs to the first terminal exists between the first terminal and the first network device, and may further send a same radio resource control reconfiguration message or different radio resource control reconfiguration messages to the first terminal depending on whether the session that belongs to the first terminal exists. The first terminal is a relay device for a second terminal to access the first network device, and the first terminal communicates with the second terminal through a sidelink. A first radio resource control connection exists between the first terminal and the first network device.

For example, the first network device may periodically determine whether the session that belongs to the first terminal exists. Alternatively, after receiving indication information, the first network device may determine whether the session that belongs to the first terminal exists. The indication information indicates the first network device to determine whether the session that belongs to the first terminal exists. Alternatively, after determining that the first terminal meets a handover condition, the first network device may determine whether the session that belongs to the first terminal exists. This is not limited in this embodiment of this application.

When determining whether the session that belongs to the first terminal exists, the first network device may determine whether a PDU session of the first terminal exists.

In some embodiments, after determining that the session that belongs to the first terminal does not exist, the first network device may perform step S620.

In some other embodiments, after determining that the session that belongs to the first terminal does not exist, the first network device may not perform step S620, and may maintain the first RRC connection to the first terminal. In other words, when the session that belongs to the first terminal does not exist, the first network device may not send an RRC reconfiguration message or handover indication information to the first terminal when the first terminal meets the handover condition, so that the second terminal can continue to maintain a connection to the first network device through the first terminal, to avoid interruption in data transmission.

S620: Send a first RRC reconfiguration message to the first terminal.

When the first network device determines that the session that belongs to the first terminal does not exist between the first terminal and the first network device, the first network device may send the first RRC reconfiguration message (namely, a first radio resource control reconfiguration message) to the first terminal. The first RRC reconfiguration message includes information indicating at least one unmeasurable cell and/or at least one measurable cell covered by the first network device.

For example, the at least one unmeasurable cell may be an unmeasurable cell covered by the first network device, or may be another unmeasurable cell. The another unmeasurable cell is an unmeasurable cell covered by a network device other than the first network device.

For example, the information indicating the at least one unmeasurable cell in the first RRC reconfiguration message may be represented in a form of an unmeasurable cell blacklist, and the information indicating the at least one measurable cell covered by the first network device in the first RRC reconfiguration message may be represented in a form of a measurable cell whitelist. In other words, the first RRC reconfiguration message may include the measurable cell whitelist and/or the unmeasurable cell blacklist.

In some embodiments, when the first network device determines that a session that belongs to the first terminal exists between the first terminal and the first network device, the first network device may send a second RRC reconfiguration message (namely, a second radio resource control reconfiguration message) to the first terminal. The second RRC reconfiguration message includes information indicating a cell covered by the first network device and/or another cell.

For example, the second RRC reconfiguration message may include any one or more of the following: at least one measurement event, a measurable cell whitelist, or an unmeasurable cell blacklist. The measurable cell whitelist in the second RRC reconfiguration message includes at least one measurable cell covered by the first network device and/or another measurable cell. The another measurable cell is a measurable cell covered by a network device other than the first network device. The unmeasurable blacklist in the second RRC reconfiguration message includes at least one unmeasurable cell. The at least one unmeasurable cell may be an unmeasurable cell covered by the first network device, or may be another unmeasurable cell. The another unmeasurable cell is an unmeasurable cell covered by a network device other than the first network device.

For example, the at least one measurement event in the second RRC reconfiguration message may include: Signal quality of a serving cell becomes higher than a corresponding threshold; the signal quality of the serving cell becomes lower than a corresponding threshold; signal quality of a neighboring cell starts to be higher than the signal quality of the serving cell by a specific offset; the signal quality of the neighboring cell becomes higher than a corresponding threshold; the signal quality of the serving cell becomes lower than a threshold 1 and the signal quality of the neighboring cell becomes higher than a threshold 2; the signal quality of the neighboring cell starts to be higher than signal quality of a secondary cell by a specific offset; and the like. This is not limited in this embodiment of this application.

In some embodiments, if the first network device determines, at a first moment, that the session that belongs to the first terminal exists, and the first network device determines, at a second moment, that the session that belongs to the first terminal does not exist, the first network device may send the first RRC reconfiguration message to the first terminal at the second moment. The first moment is different from the second moment, and the first moment is earlier than the second moment.

In some other embodiments, if the first network device determines, at a third moment, that the session that belongs to the first terminal does not exist, and the first network device determines, at a fourth moment, that the session that belongs to the first terminal exists, the first network device may send the second RRC reconfiguration message to the first terminal at the fourth moment. The third moment is different from the fourth moment, and the third moment is earlier than the fourth moment.

S630: Perform signal measurement based on the first RRC reconfiguration message.

After the first terminal receives the first RRC reconfiguration message from the first network device, the first terminal may perform signal measurement based on the first RRC reconfiguration message.

For example, if the first RRC reconfiguration message includes the information indicating the at least one measurable cell covered by the first network device, the first terminal may measure a signal strength of each measurable cell in the at least one measurable cell.

For example, if the first RRC reconfiguration message includes the information indicating the at least one unmeasurable cell, the first terminal may not measure a signal strength of a cell included in the at least one unmeasurable cell. In this case, the first terminal may further measure a signal strength of a cell other than the at least one unmeasurable cell.

In some embodiments, after the first terminal receives the second RRC reconfiguration message from the first network device, the first terminal may perform signal measurement based on the second RRC reconfiguration message.

For example, if the second RRC reconfiguration message includes the at least one measurement event, the first terminal may perform measurement based on the at least one measurement event. For example, if one of the at least one measurement event may be a measurement event A3, the first terminal may measure a signal strength of a serving cell and a signal strength of a cell other than the serving cell.

For example, if the second RRC reconfiguration message includes the measurable cell whitelist, the first terminal may measure a signal strength of a cell included in the measurable cell whitelist.

For example, if the second RRC reconfiguration message includes the unmeasurable cell blacklist, the first terminal may not measure a signal strength of a cell included in the unmeasurable cell blacklist. In this case, the first terminal may further measure a signal strength of a cell other than the cell included in the unmeasurable cell blacklist.

In some embodiments, the first terminal may send a first measurement report to the first network device based on signal quality obtained through measurement. The first measurement report is determined based on the first RRC reconfiguration message or the second RRC reconfiguration message.

In some other embodiments, the first network device may determine, based on the first measurement report received from the first terminal, whether to send the handover indication information to the first terminal.

The first network device may send a same RRC reconfiguration message or different RRC reconfiguration messages to the first terminal depending on whether the session that belongs to the first terminal exists. When the session that belongs to the first terminal does not exist, the first RRC reconfiguration message sent by the first network device to the first terminal may enable the first terminal to maintain the connection to the first network device, so that the second terminal can transmit data to the first network device through the first terminal, to avoid interruption in data communicated by the second terminal.

FIG. 7 is a schematic flowchart of a communication method according to an embodiment of this application. The communication method 700 includes S710 to S740.

S710: Determine whether a session that belongs to a first terminal exists.

A first radio resource control connection exists between a first network device and the first terminal. The first terminal is a relay device for a second terminal to access the first network device, and the first terminal communicates with the second terminal through a sidelink.

For example, the first network device may periodically determine whether the session that belongs to the first terminal exists. Alternatively, after meeting a preset condition, the first network device may determine whether the session that belongs to the first terminal exists. The preset condition may include: Indication information is received, where the indication information indicates to determine whether the session that belongs to the first terminal exists; it is determined that the first terminal meets a handover condition; or the like. This is not limited in this embodiment of this application.

A specific implementation in which the first network device determines that the session that belongs to the first terminal does not exist is similar to that of step S610. Details are not described herein again.

S720: Send a first RRC reconfiguration message or a second RRC reconfiguration message to the first terminal.

When determining that the session that belongs to the first terminal does not exist, the first network device may send the first RRC reconfiguration message to the first terminal. The first RRC reconfiguration message includes information indicating at least one unmeasurable cell and/or at least one measurable cell covered by the first network device. A specific implementation in which the first network device sends the first RRC reconfiguration message to the first terminal is similar to that of step S620. Details are not described herein again.

When determining that the session that belongs to the first terminal does not exist, the first network device may send the second RRC reconfiguration message to the first terminal. The second RRC reconfiguration message includes information indicating a cell covered by the first network device and/or another cell, and the another cell is a cell other than the cell covered by the first network device.

For example, the second RRC reconfiguration message includes any one or more of the following: at least one measurement event, a measurable cell whitelist, or an unmeasurable cell blacklist. The measurable cell whitelist includes at least one measurable cell within or beyond coverage of the first network device, and the unmeasurable cell blacklist includes at least one unmeasurable cell.

S730: The first terminal performs signal measurement based on the first RRC reconfiguration message or the second RRC reconfiguration message. Step S730 is similar to step S630. Details are not described herein again.

S740: Send a first measurement report to the first network device.

The first terminal may perform signal measurement based on the first RRC reconfiguration message or the second RRC reconfiguration message, and send the first measurement report to the first network device. The first measurement report may include information indicating signal quality obtained by the first terminal through measurement.

For example, if the first RRC reconfiguration message includes the at least one measurable cell covered by the first network device, the first measurement report may include signal quality of each cell in the at least one measurable cell covered by the first network device.

For example, if the first RRC reconfiguration message includes the at least one unmeasurable cell, the first measurement report may include signal quality of a cell other than a cell included in the at least one unmeasurable cell.

For example, if the second RRC reconfiguration message includes the at least one measurement event, the first measurement report may include a measurement event that is met by a measurement result and that is in the at least one measurement event. Alternatively, the first measurement report may include a target cell or a target base station that enables a measurement result to meet the measurement event. The target cell is a cell covered by the target base station. Alternatively, the first measurement report may include signal quality of a cell related to the at least one measurement event.

For example, if the second RRC reconfiguration message includes the measurable cell whitelist, the first measurement report may include signal quality of a cell included in the measurable cell whitelist.

For example, if the second RRC reconfiguration message includes the unmeasurable cell blacklist, the first measurement report may include signal quality of a cell other than a cell included in the unmeasurable cell blacklist.

In some embodiments, after receiving the first measurement report from the first terminal, the first network device may determine that the first terminal meets the handover condition, and send handover indication information to the first terminal.

For example, when the first network device determines that the session that belongs to the first terminal does not exist, the first network device may determine, based on the received first measurement report, a target cell list or a target frequency list that meets the handover condition, and determine a first cell or a first frequency from the target cell list or the target frequency list. A cell or a frequency included in the target cell list or the target frequency list is a cell or a frequency covered by the first network device. The first network device may send handover indication information to the first terminal. The handover indication information indicates the first terminal to be handed over from a current serving cell to the first cell. The first cell is a cell with best signal quality in cells that are in the target cell list and that can provide a service for the first terminal. The first frequency is a frequency with best signal quality in one or more frequencies that are in the target frequency list and whose corresponding cells can provide a service for the first terminal. A cell corresponding to the first frequency may be the first cell.

For example, when the first network device determines that the session that belongs to the first terminal exists, the first network device may determine, based on the received first measurement report, a target cell list or a target frequency list that meets the handover condition. A cell or a frequency included in the target cell list or the target frequency list is a cell or a frequency covered by the first network device, or may be a cell or a frequency covered by a network device other than the first network device. The first network device may further determine a first cell or a first frequency from the target cell list or the target frequency list. The first cell may be a cell covered by the first network device, or may be a cell covered by a network device other than the first network device. The first cell is a cell with best signal quality in cells that are in the target cell list and that can provide a service for the first terminal. The first frequency is a frequency with best signal quality in one or more frequencies that are in the target frequency list and whose corresponding cells can provide a service for the first terminal. A cell corresponding to the first frequency may be the first cell.

If the first cell is the cell covered by the first network device, the first network device may send handover indication information to the first terminal. The handover indication information indicates the first terminal to be handed over from a current serving cell to the first cell.

If the first cell is the cell covered by the network device other than the first network device, and the network device to which the first cell belongs is a second network device, the first network device may send a handover request message to the second network device, to assist the first terminal in being handed over from the current serving cell to the first cell covered by the second network device.

In some embodiments, after the first network device sends the handover indication information to the first terminal, the first terminal may establish a second RRC connection to the second network device. The first terminal, as a relay terminal of the second terminal, may relay data between the second terminal and the second network device. After accessing the second network device, the first terminal may camp on a cell covered by the second network device.

A process in which the first terminal is handed over from the current serving cell to the first cell may be a coverage-based intra-frequency handover process, or may be a coverage-based inter-frequency handover process.

When a partial overlapping area exists between a signal range of the current serving cell and a signal range of the first cell, and the current serving cell and the first cell have a same frequency, the process in which the first terminal is handed over from the current serving cell to the first cell is coverage-based intra-frequency handover.

In some embodiments of the coverage-based intra-frequency handover, when determining that the session that belongs to the first terminal does not exist, the first network device may send a first RRC reconfiguration message to the first terminal. The first RRC reconfiguration message includes information indicating at least one unmeasurable cell and/or at least one measurable cell covered by the first network device.

Alternatively, when determining that a session that belongs to the first terminal exists, the first network device may send a second RRC reconfiguration message to the first terminal. The second RRC reconfiguration message includes any one or more of the following: at least one measurement event, a measurable cell whitelist, or an unmeasurable cell blacklist. For example, the second RRC reconfiguration message may include a measurement event A3.

For example, after receiving the first RRC reconfiguration message or the second RRC reconfiguration message, the first terminal may perform signal measurement based on the first RRC reconfiguration message or the second RRC reconfiguration message. In addition, the first terminal may send a first measurement report to the first network device. The first measurement report is determined based on the first RRC reconfiguration message or the second RRC reconfiguration message. For example, when the second RRC reconfiguration message includes the measurement event A3, the first measurement report may include at least one target cell or target frequency that meets the measurement event A3.

For example, after receiving the first measurement report from the first terminal, the first network device may generate a target cell list or a target frequency list based on the first measurement report. The first network device may determine a first cell from the target cell list or the target frequency list. When the session that belongs to the first terminal does not exist, the first cell is a cell covered by the first network device. When the session that belongs to the first terminal exists, the first cell may be a cell covered by the first network device, or may be a cell covered by a network device other than the first network device.

When a partial overlapping area exists between a signal range of the current serving cell and a signal range of the first cell, and the current serving cell and the first cell have different frequencies, the process in which the first terminal is handed over from the current serving cell to the first cell is the coverage-based inter-frequency handover.

In some embodiments of the coverage-based inter-frequency handover, before performing S710, the first network device may receive a second measurement report from the first terminal. In other words, the method 700 may further include S701.

S701: The first terminal sends a second measurement report to the first network device.

The second measurement report includes information indicating signal quality obtained by the first terminal through measurement.

For example, the second measurement report may be determined based on RRC configuration information recently received by the first terminal. The RRC configuration information recently received by the first terminal includes any one of the following: RRC configuration information received when a connection is established between the first terminal and the first network device, a first RRC reconfiguration message, or a second RRC reconfiguration message. The RRC configuration information received when the connection is established between the first terminal and the first network device may include at least one measurement event.

For example, if the RRC configuration information recently received by the first terminal is the RRC configuration information received when the connection is established between the first terminal and the first network device, and the RRC configuration information received when the connection is established between the first terminal and the first network device includes a measurement event A2, the second measurement report may include information indicating that reference signal received power (reference signal received power, RSRP) or reference signal received quality (reference signal received quality, RSRQ) of a second cell or a second frequency meets the measurement event A2. The second cell or the second frequency may be a cell or a frequency covered by the first network device, or may be a cell or a frequency covered by a network device other than the first network device.

For example, if the RRC configuration information recently received by the first terminal is the first RRC reconfiguration message or the second RRC reconfiguration message, the second measurement report may be similar to the first measurement report.

In some embodiments of the coverage-based inter-frequency handover, after receiving the second measurement report from the first terminal, the first network device may determine whether a session that belongs to the first terminal exists. Alternatively, the first network device may periodically determine whether a session that belongs to the first terminal exists, or the like. This is not limited in this embodiment of this application.

In some embodiments of the coverage-based inter-frequency handover, when determining that the session that belongs to the first terminal does not exist, the first network device may send a first RRC reconfiguration message to the first terminal. The first RRC reconfiguration message includes information indicating at least one unmeasurable cell and/or at least one measurable cell covered by the first network device.

Alternatively, when determining that a session that belongs to the first terminal exists, the first network device may send a second RRC reconfiguration message to the first terminal. The second RRC reconfiguration message includes any one or more of the following: at least one measurement event, a measurable cell whitelist, or an unmeasurable cell blacklist. For example, the second RRC reconfiguration message may include a measurement event A5 and a measurement event A1, or the second RRC reconfiguration message may include a measurement event A3 and a measurement event A1. The measurement event A1 is that signal quality of a serving cell becomes higher than a corresponding threshold.

In some embodiments of the coverage-based inter-frequency handover, when receiving the second measurement report and determining that the session that belongs to the first terminal exists, the first network device may determine specific content of a second RRC reconfiguration message based on configuration information of a cell or a frequency related to the second measurement report.

For example, when the second measurement report includes information indicating that RSRP or RSRQ of a second cell or a second frequency meets a measurement event A2, and it is determined that the session that belongs to the first terminal exists, the first network device may determine, based on configuration information of the second cell or the second frequency, at least one measurement event included in the second RRC reconfiguration message.

If the configuration information of the second cell or the second frequency is an event A5, the second RRC reconfiguration message may include a measurement event A5 and a measurement event A1. If the configuration information of the second cell or the second frequency is an event A3, the second RRC reconfiguration message may include a measurement event A3 and a measurement event A1.

Optionally, the configuration information of the second cell or the second frequency may be information stored in the first network device. Alternatively, the configuration information of the second cell or the second frequency may be information sent by the first terminal to the first network device. This is not limited in this embodiment of this application.

For example, after receiving the first RRC reconfiguration message or the second RRC reconfiguration message, the first terminal may perform signal measurement based on the first RRC reconfiguration message or the second RRC reconfiguration message. In addition, the first terminal may send a first measurement report to the first network device. The first measurement report is determined based on the first RRC reconfiguration message or the second RRC reconfiguration message. For example, when the second RRC reconfiguration message includes the measurement event A5 and the measurement event A1, the first measurement report may include at least one target cell or target frequency that meets the measurement event A5 and the measurement event A1.

For example, after receiving the first measurement report from the first terminal, the first network device may generate a target cell list or a target frequency list based on the first measurement report. The first network device may determine a first cell from the target cell list or the target frequency list. When the session that belongs to the first terminal does not exist, the first cell is a cell covered by the first network device. When the session that belongs to the first terminal exists, the first cell may be a cell covered by the first network device, or may be a cell covered by a network device other than the first network device.

In some other embodiments of the coverage-based inter-frequency handover, when receiving the second measurement report from the first terminal and determining that the session that belongs to the first terminal does not exist, the first network device may not send a first RRC reconfiguration message to the first terminal, and maintain the first RRC connection to the first terminal. In this case, the second terminal may continue to maintain a connection to the first network device through the first terminal, to avoid interruption of data transmission.

When the session that belongs to the first terminal exists, the first network device may send a second RRC reconfiguration message to the first terminal, so that the first terminal may perform signal measurement based on the second RRC reconfiguration message, to determine whether a cell with better signal quality exists. When the session that belongs to the first terminal does not exist, the first network device may alternatively send a first RRC reconfiguration message to the first terminal, so that the first terminal maintains a connection to the first network device, to avoid interruption in data communicated by the second terminal.

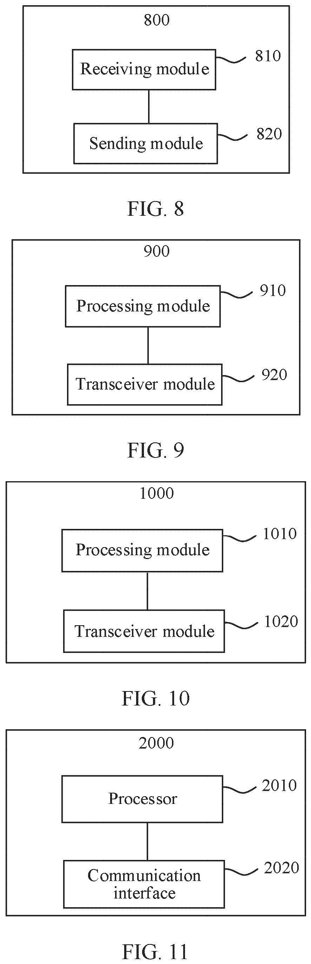

FIG. 8 is a diagram of a structure of a communication apparatus according to an embodiment of this application.

The communication apparatus 800 includes a receiving module 810 and a sending module 820.

The receiving module 810 is configured to receive radio resource control release information sent by a first network device. The radio resource control release information indicates to release a first radio resource control connection between a first terminal and the first network device. The first terminal may include the apparatus 800.

The sending module 820 is configured to send first indication information to a second terminal. The first terminal is a relay device for the second terminal to access the first network device, and the first indication information indicates to release a sidelink between the first terminal and the second terminal, indicates that the first radio resource control connection is released, or indicates that a state of the first radio resource control connection is a connection failure state.

Optionally, the communication apparatus 800 further includes an establishment module, configured to establish a second radio resource control connection to a second network device, where the second radio resource control connection is used by the second terminal to access the second network device.

Optionally, the receiving module 810 is further configured to receive second indication information sent by the second terminal. The second indication information indicates to maintain a sidelink.

Optionally, the establishment module is specifically configured to: when the sidelink is not disconnected at a detection time point, establish an RRC connection to the second network device. The detection time point includes a time point of first duration since the first indication information is sent.

Optionally, the radio resource control release information is received when the first terminal meets a handover condition and a session that belongs to the first terminal does not exist between the first terminal and the first network device.

Optionally, the communication apparatus 800 further includes a processing module. The processing module is configured to determine a connection state of the first radio resource control connection.

The sending module 820 is further configured to send state indication information to the second terminal. The state indication information includes first state information, second state information, or third state information, the first state information indicates that the connection state is an establishing state, the second state information indicates that the connection state is an established state, and the third state information indicates that the connection state is an establishment failure state.

Optionally, the processing module is specifically configured to: when the first terminal is being handed over, the first radio resource control connection is being established, or the first radio resource control connection on which a radio link failure occurs is being recovered, determine that the connection state is the establishing state.

The processing module is specifically configured to: when the first terminal is handed over, the first radio resource control connection is established, or the first radio resource control connection on which a radio link failure occurs is recovered, determine that the connection state is the established state.

The processing module is specifically configured to: when the first terminal device fails to be handed over, the first radio resource control connection fails to be established, a radio link failure occurs on the first radio resource control connection, the first radio resource control connection on which the radio link failure occurs fails to be recovered, or the first radio resource control connection is released, determine that the connection state is the establishment failure state.

FIG. 9 is a diagram of a structure of a communication apparatus according to an embodiment of this application.

The communication apparatus 900 includes a processing module 910 and a transceiver module 920.

The processing module 910 is configured to determine a connection state of a first radio resource control connection between a first terminal and a first network device. The communication apparatus 900 may be located in the first terminal.

The transceiver module 920 is configured to send state indication information to a second terminal. The state indication information includes first state information, second state information, or third state information. The first state information indicates that the connection state is an establishing state, the second state information indicates that the connection state is an established state, and the third state information indicates that the connection state is an establishment failure state. The first terminal is a relay device for the second terminal to access the first network device.

Optionally, the processing module 910 is specifically configured to: when the first terminal is being handed over, the first radio resource control connection is being established, or the first radio resource control connection on which a radio link failure occurs is being recovered, determine that the connection state is the establishing state.

The processing module 910 is specifically configured to: when the first terminal is handed over, the first radio resource control connection is established, or the first radio resource control connection on which a radio link failure occurs is recovered, determine that the connection state is the established state.

The processing module 910 is specifically configured to: when the first terminal device fails to be handed over, the first radio resource control connection fails to be established, a radio link failure occurs on the first radio resource control connection, the first radio resource control connection on which the radio link failure occurs fails to be recovered, or the first radio resource control connection is released, determine that the connection state is the establishment failure state.

Optionally, the processing module 910 is specifically configured to: when radio resource control release information sent by the first network device is received, determine that the connection state is the establishment failure state. The radio resource control release information indicates to release the first radio resource control connection.

Optionally, the processing module 910 is further configured to establish a second radio resource control connection to a second network device. The second radio resource control connection is used by the second terminal to access the second network device.

Optionally, the transceiver module 920 is configured to receive second indication information sent by the second terminal. The second indication information indicates to maintain a sidelink.

Optionally, the processing module 910 is specifically configured to: when the sidelink is not disconnected at a detection time point, establish an RRC connection to the second network device. The detection time point includes a time point of first duration since first indication information is sent.

Optionally, the processing module 910 is specifically configured to: the radio resource control release information is received when the first terminal meets a handover condition and a session that belongs to the first terminal does not exist between the first terminal and the first network device.

In some embodiments, the transceiver module 920 may receive a first radio resource control reconfiguration message from the first network device when the session that belongs to the first terminal does not exist between the first terminal and the first network device, or may receive a second radio resource control reconfiguration message from the first network device when the session that belongs to the first terminal exists. The transceiver module 920 may further send a first measurement report or a second measurement report to the first network device. The transceiver module 920 may perform step S620 in the method in FIG. 6 or step S701, step S720, and step S740 in the method in FIG. 7.

In some embodiments, the processing module 910 may perform signal measurement based on the first radio resource control reconfiguration message or the second radio resource control reconfiguration message. The processing module 910 may perform step S630 in the method in FIG. 6 or step S730 in the method in FIG. 7.

In some embodiments, the transceiver module 920 may alternatively send a second measurement report to the first network device before receiving the first radio resource control reconfiguration message or the second radio resource control reconfiguration message from the first network device. The second measurement report includes information indicating signal quality obtained by the first terminal through measurement.

FIG. 10 is a diagram of a structure of a communication apparatus according to an embodiment of this application.

The communication apparatus 1000 includes a processing module 1010 and a transceiver module 1020.

The processing module 1010 is configured to determine that a first terminal meets a handover condition and a session that belongs to the first terminal does not exist between the first terminal and a first network device. The first terminal is a relay device for a second terminal to access the first network device. A first radio resource control connection exists between the first terminal and the first network device.

The transceiver module 1020 is configured to send radio resource control release information to the first terminal. The radio resource control release information indicates to release the first radio resource control connection between the first terminal and the first network device.

In some embodiments, the transceiver module 1020 is further configured to receive a measurement report from the first terminal. The measurement report includes information indicating signal quality obtained by the first terminal through measurement.

In some embodiments, the processing module 1010 is further configured to determine, based on the measurement report received from the first terminal, that the first terminal meets the handover condition. The processing module 1010 may be further configured to release the first radio resource control connection between the first terminal and the first network device.

In some embodiments, the processing module 1010 may determine whether a session that belongs to the first terminal exists between the first terminal and the first network device. The first terminal is a relay device for the second terminal to access the first network device. The processing module 1010 may perform step S610 in the method in FIG. 6 or step S710 in the method in FIG. 7.

In some embodiments, the transceiver module 1020 may send a first radio resource control reconfiguration message to the first terminal when the session that belongs to the first terminal does not exist, or may send a second radio resource control reconfiguration message to the first terminal when the session that belongs to the first terminal exists. The transceiver module 1020 may further receive a first measurement report or a second measurement report from the first terminal. The transceiver module 1020 may perform step S620 in the method in FIG. 6, or step S701, step S720, and step S740 in the method in FIG. 7.

In some embodiments, the processing module 1010 may further determine, based on the second measurement report, that the first terminal meets the handover condition.

FIG. 11 is a diagram of a structure of a communication apparatus according to an embodiment of this application.

The communication apparatus 2000 includes at least one processor 2010 and a communication interface 2020. The communication interface 2020 is configured to perform information exchange between the terminal and another communication apparatus, and when program instructions are executed by the at least one processor, the terminal is enabled to perform the foregoing communication method. A first terminal may include the communication apparatus 2000.

Specifically, in some embodiments, the at least one processor 2010 may be configured to receive, through the communication interface 2020, radio resource control release information sent by a first network device. The radio resource control release information indicates to release a first radio resource control connection between the first terminal and the first network device.

The at least one processor 2010 may be further configured to send first indication information to a second terminal through the communication interface 2020. The first terminal is a relay device for the second terminal to access the first network device, and the first indication information indicates to release a sidelink between the first terminal and the second terminal, indicates that the first radio resource control connection is released, or indicates that a state of the first radio resource control connection is a connection failure state.

Optionally, the at least one processor 2010 is further configured to establish a second radio resource control connection to a second network device. The second radio resource control connection is used by the second terminal to access the second network device.

Optionally, the at least one processor 2010 is further configured to receive, through the communication interface 2020, second indication information sent by the second terminal. The second indication information indicates to maintain a sidelink.

Optionally, the at least one processor 2010 is specifically configured to: when the sidelink is not disconnected at a detection time point, establish an RRC connection to the second network device. The detection time point includes a time point of first duration since the first indication information is sent.

Optionally, the radio resource control release information is received when the first terminal meets a handover condition and a session that belongs to the first terminal does not exist between the first terminal and the first network device.

Optionally, the at least one processor 2010 is specifically configured to determine a connection state of the first radio resource control connection.

The at least one processor 2010 is further configured to send state indication information to the second terminal through the communication interface 2020. The state indication information includes first state information, second state information, or third state information, the first state information indicates that the connection state is an establishing state, the second state information indicates that the connection state is an established state, and the third state information indicates that the connection state is an establishment failure state.

Optionally, the at least one processor 2010 is specifically configured to: when the first terminal is being handed over, the first radio resource control connection is being established, or the first radio resource control connection on which a radio link failure occurs is being recovered, determine that the connection state is the establishing state.

The at least one processor 2010 is specifically configured to: when the first terminal is handed over, the first radio resource control connection is established, or the first radio resource control connection on which a radio link failure occurs is recovered, determine that the connection state is the established state.

The at least one processor 2010 is specifically configured to: when the first terminal device fails to be handed over, the first radio resource control connection fails to be established, a radio link failure occurs on the first radio resource control connection, the first radio resource control connection on which the radio link failure occurs fails to be recovered, or the first radio resource control connection is released, determine that the connection state is the establishment failure state.

In some other embodiments, the at least one processor 2010 is configured to determine a connection state of a first radio resource control connection between a first terminal and a first network device.

The communication interface 2020 is configured to send state indication information to a second terminal. The state indication information includes first state information, second state information, or third state information. The first state information indicates that the connection state is an establishing state, the second state information indicates that the connection state is an established state, and the third state information indicates that the connection state is an establishment failure state. The first terminal is a relay device for a second terminal to access the first network device.

Optionally, the at least one processor 2010 is specifically configured to: when the first terminal is being handed over, the first radio resource control connection is being established, or the first radio resource control connection on which a radio link failure occurs is being recovered, determine that the connection state is the establishing state.

The at least one processor 2010 is specifically configured to: when the first terminal is handed over, the first radio resource control connection is established, or the first radio resource control connection on which a radio link failure occurs is recovered, determine that the connection state is the established state.

The at least one processor 2010 is specifically configured to: when the first terminal device fails to be handed over, the first radio resource control connection fails to be established, a radio link failure occurs on the first radio resource control connection, the first radio resource control connection on which the radio link failure occurs fails to be recovered, or the first radio resource control connection is released, determine that the connection state is the establishment failure state.

Optionally, the at least one processor 2010 is specifically configured to: when radio resource control release information sent by the first network device is received, determine that the connection state is the establishment failure state. The radio resource control release information indicates to release the first radio resource control connection.

Optionally, the at least one processor 2010 is specifically configured to establish a second radio resource control connection to a second network device. The second radio resource control connection is used by the second terminal to access the second network device.

Optionally, the communication interface 2020 is further configured to, the method further includes: receive second indication information sent by the second terminal. The second indication information indicates to maintain the sidelink.

Optionally, the at least one processor 2010 is specifically configured to: when the sidelink is not disconnected at a detection time point, establish an RRC connection to the second network device. The detection time point includes a time point of first duration since the first indication information is sent.

Optionally, the radio resource control release information is received when the first terminal meets a handover condition and a session that belongs to the first terminal does not exist between the first terminal and the first network device.

In some embodiments, the at least one processor 2010 may be configured to: when the session that belongs to the first terminal does not exist between the first terminal and the first network device, receive a first radio resource control reconfiguration message from the first network device through the communication interface 2020.

In some embodiments, the at least one processor 2010 may be further configured to: when the session that belongs to the first terminal exists, receive a second radio resource control reconfiguration message from the first network device through the communication interface 2020.

In some embodiments, the at least one processor 2010 may be further configured to perform signal measurement based on the first radio resource control reconfiguration message or the second radio resource control reconfiguration message.

In some embodiments, the at least one processor 2010 may be further configured to send a first measurement report or a second measurement report to the first network device through the communication interface 2020.

In some embodiments, the at least one processor 2010 may be further configured to establish a second RRC connection to the second network device. The second radio resource control connection is used by the second terminal to access the second network device.

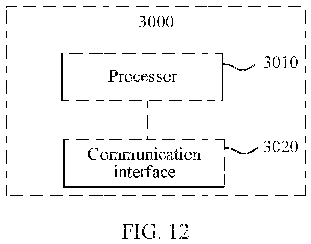

FIG. 12 is a diagram of a structure of a communication apparatus according to an embodiment of this application.

The communication apparatus 3000 includes at least one processor 3010 and a communication interface 3020. The communication interface 3020 is configured to perform information exchange between the communication apparatus and another communication apparatus, and when program instructions are executed by the at least one processor, the communication apparatus is enabled to perform the foregoing communication method. A first network device may include the communication apparatus 3000.

In some embodiments, the at least one processor 3010 may be configured to determine that a first terminal meets a handover condition and a session that belongs to the first terminal does not exist between the first terminal and a first network device. The first terminal is a relay device for a second terminal to access the first network device. A first radio resource control connection exists between the first terminal and the first network device.

In some embodiments, the at least one processor 3010 may be further configured to send radio resource control release information to the first terminal through the communication interface 3020. The radio resource control release information indicates to release the first radio resource control connection between the first terminal and the first network device.

In some embodiments, the at least one processor 3010 may be further configured to receive a measurement report from the first terminal through the communication interface 3020. The measurement report includes information indicating signal quality obtained by the first terminal through measurement.

In some embodiments, the at least one processor 3010 may be further configured to determine, based on the measurement report received from the first terminal, that the first terminal meets the handover condition.

In some embodiments, the at least one processor 3010 may be further configured to release the first radio resource control connection between the first terminal and the first network device.

In some embodiments, the at least one processor 3010 may be configured to determine whether a session that belongs to the first terminal exists between the first terminal and the first network device. The first terminal is a relay device for the second terminal to access the first network device.

In some embodiments, the at least one processor 3010 may be further configured to: when the session that belongs to the first terminal does not exist, send a first radio resource control reconfiguration message to the first terminal through the communication interface 3020.

In some embodiments, the at least one processor 3010 may be further configured to: when the session that belongs to the first terminal exists, send a second radio resource control reconfiguration message to the first terminal through the communication interface 3020.

In some embodiments, the at least one processor 3010 may be further configured to receive a first measurement report or a second measurement report from the first terminal through the communication interface 3020.

An embodiment of this application further provides a communication system, including the first terminal, the second terminal, and the first network device. In some embodiments, the communication system may further include a second network device.

An embodiment of this application further provides a computer program storage medium. The computer program storage medium has program instructions, and when the program instructions are executed, the foregoing method is performed.

An embodiment of this application further provides a chip system. The chip system includes at least one processor, and when program instructions are executed by the at least one processor, the foregoing method is performed.

It should be understood that, the processor in this embodiment of this application may be a central processing unit (central processing unit, CPU). The processor may alternatively be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The general-purpose processor may be a microprocessor, or the processor may be any conventional processor or the like.

It may be understood that in this embodiment of this application, the memory may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memory, RAM) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware, firmware, or any combination thereof. When software is used to implement embodiments, the foregoing embodiments may be implemented completely or partially in a form of a computer program product. The computer program product includes one or more computer instructions or computer programs. When the program instructions or the computer programs are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, a computer, a server, or a data center to another website, another computer, another server, or another data center in a wired (for example, infrared, radio, or microwave) manner. The computer-readable storage medium may be any usable medium accessible by a computer, or a data storage device, such as a server or a data center, including one or more usable medium sets. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, at least one means one or more, and a plurality of means two or more. At least one of the following items (pieces) or a similar expression thereof indicates any combination of these items, including a single item (piece) or any combination of a plurality of items (pieces). For example, at least one item (piece) of a, b, or c may represent: a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separate, and components displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
receiving radio resource control release information sent by a first network device, wherein the radio resource control release information indicates to release a first radio resource control connection between a first terminal and the first network device; and
sending first indication information to a second terminal, wherein the first terminal is a relay device for the second terminal to access the first network device, and the first indication information indicates at least one of the following: indicating to release a sidelink between the first terminal and the second terminal, indicating that the first radio resource control connection is released, or indicating that a state of the first radio resource control connection is a connection failure state.

2. The method according to claim 1, wherein the method further comprises:
establishing a second radio resource control connection to a second network device, wherein the second radio resource control connection is used by the second terminal to access the second network device.

3. The method according to claim 1 or 2, wherein
the method further comprises: receiving second indication information sent by the second terminal, wherein the second indication information indicates to maintain the sidelink.

4. The method according to claim 2, wherein
the establishing a second radio resource control connection to a second network device comprises: when the sidelink is not disconnected at a detection time point, establishing an RRC connection to the second network device, wherein the detection time point comprises a time point of first duration since the first indication information is sent.

5. The method according to any one of claims 1 to 4, wherein
the radio resource control release information is received when the first terminal meets a handover condition and a session that belongs to the first terminal does not exist between the first terminal and the first network device.

6. The method according to claim 1, wherein the method further comprises:
determining a connection state of the first radio resource control connection; and
sending state indication information to the second terminal, wherein the state indication information comprises first state information, second state information, or third state information, the first state information indicates that the connection state is an establishing state, the second state information indicates that the connection state is an established state, and the third state information indicates that the connection state is an establishment failure state.

7. The method according to claim 6, wherein the determining a connection state of the first radio resource control connection comprises:
when the first terminal is being handed over, the first radio resource control connection is being established, or the first radio resource control connection on which a radio link failure occurs is being recovered, determining that the connection state is the establishing state; or
when the first terminal is handed over, the first radio resource control connection is established, or the first radio resource control connection on which a radio link failure occurs is recovered, determining that the connection state is the established state; or
when the first terminal fails to be handed over, the first radio resource control connection fails to be established, a radio link failure occurs on the first radio resource control connection, the first radio resource control connection on which the radio link failure occurs fails to be recovered, or the first radio resource control connection is released, determining that the connection state is the establishment failure state.

8. A communication method, wherein the method comprises:
determining a connection state of a first radio resource control connection between a first terminal and a first network device; and
sending state indication information to a second terminal, wherein the state indication information comprises first state information, second state information, or third state information, the first state information indicates that the connection state is an establishing state, the second state information indicates that the connection state is an established state, and the third state information indicates that the connection state is an establishment failure state; and the first terminal is a relay device for the second terminal to access the first network device.

9. The method according to claim 8, wherein the determining a connection state of a first radio resource control connection between a first terminal and a first network device comprises:
when the first terminal is being handed over, the first radio resource control connection is being established, or the first radio resource control connection on which a radio link failure occurs is being recovered, determining that the connection state is the establishing state; or
when the first terminal is handed over, the first radio resource control connection is established, or the first radio resource control connection on which a radio link failure occurs is recovered, determining that the connection state is the established state; or
when the first terminal device fails to be handed over, the first radio resource control connection fails to be established, a radio link failure occurs on the first radio resource control connection, the first radio resource control connection on which the radio link failure occurs fails to be recovered, or the first radio resource control connection is released, determining that the connection state is the establishment failure state.

10. The method according to claim 8 or 9, wherein the determining a connection state of a first radio resource control connection between a first terminal and a first network device comprises: when receiving radio resource control release information sent by the first network device, determining that the connection state is the establishment failure state, wherein the radio resource control release information indicates to release the first radio resource control connection.

11. The method according to claim 10, wherein the method further comprises:
establishing a second radio resource control connection to a second network device, wherein the second radio resource control connection is used by the second terminal to access the second network device.

12. The method according to claim 10 or 11, wherein
the method further comprises: receiving second indication information sent by the second terminal, wherein the second indication information indicates to maintain a sidelink.

13. The method according to claim 11 or 12, wherein
the establishing a second radio resource control connection to a second network device comprises: when the sidelink is not disconnected at a detection time point, establishing an RRC connection to the second network device, wherein the detection time point comprises a time point of first duration since first indication information is sent.

14. The method according to any one of claims 10 to 13, wherein
the radio resource control release information is received when the first terminal meets a handover condition and a session that belongs to the first terminal does not exist between the first terminal and the first network device.

15. A communication method, wherein the method comprises:
determining that a first terminal meets a handover condition and a session that belongs to the first terminal does not exist between the first terminal and a first network device, wherein the first terminal is a relay device for a second terminal to access the first network device, and a first radio resource control connection exists between the first terminal and the first network device; and
sending radio resource control release information to the first terminal, wherein the radio resource control release information indicates to release the first radio resource control connection.

16. The method according to claim 15, wherein the method further comprises:
receiving a measurement report from the first terminal, wherein the measurement report comprises information indicating signal quality obtained by the first terminal through measurement; and
determining, based on the measurement report, that the first terminal meets the handover condition.

17. The method according to claim 15 or 16, wherein the method further comprises:
releasing the first radio resource control connection between the first terminal and the first network device.

18. A communication method, wherein the method comprises:
determining whether a session that belongs to a first terminal exists between the first terminal and a first network device, wherein the first terminal is a relay device for a second terminal to access the first network device; and
when the session that belongs to the first terminal does not exist, sending a first radio resource control reconfiguration message to the first terminal, wherein the first radio resource control reconfiguration message comprises information indicating at least one unmeasurable cell and/or at least one measurable cell covered by the first network device.

19. The method according to claim 18, wherein the method further comprises:
when the session that belongs to the first terminal exists, sending a second radio resource control reconfiguration message to the first terminal, wherein the second radio resource control reconfiguration message comprises information indicating a cell covered by the first network device and/or another cell, and the another cell is a cell other than the cell covered by the first network device.

20. The method according to claim 19, wherein the second radio resource control reconfiguration message comprises any one or more of the following: at least one measurement event, a measurable cell whitelist, or an unmeasurable cell blacklist, wherein the measurable cell whitelist comprises at least one measurable cell within or beyond coverage of the first network device, and the unmeasurable cell blacklist comprises at least one unmeasurable cell.

21. The method according to any one of claims 18 to 20, wherein the method further comprises:
receiving a first measurement report from the first terminal, wherein the first measurement report is determined based on the second radio resource control reconfiguration message or the first radio resource control reconfiguration message.

22. The method according to any one of claims 18 to 21, wherein before the determining that a session that belongs to a first terminal exists between the first terminal and a first network device, the method further comprises:
receiving a second measurement report from the first terminal, wherein the second measurement report comprises information indicating signal quality obtained by the first terminal through measurement; and
determining, based on the second measurement report, that the first terminal meets a handover condition.

23. A communication method, wherein the method comprises:
when a session that belongs to a first terminal does not exist between the first terminal and a first network device, receiving a first radio resource control reconfiguration message from the first network device, wherein the first radio resource control reconfiguration message comprises information indicating at least one unmeasurable cell and/or at least one measurable cell covered by the first network device, and the first terminal is a relay device for a second terminal to access the first network device; and
performing signal measurement based on the first radio resource control reconfiguration message.

24. The method according to claim 23, wherein the method further comprises:
when the session that belongs to the first terminal exists, receiving a second radio resource control reconfiguration message from the first network device, wherein the second radio resource control reconfiguration message comprises information indicating a cell covered by the first network device and/or another cell, and the another cell is a cell other than the cell covered by the first network device; and
performing signal measurement based on the second radio resource control reconfiguration message.

25. The method according to claim 24, wherein the second radio resource control reconfiguration message comprises any one or more of the following: at least one measurement event, a measurable cell whitelist, or an unmeasurable cell blacklist, wherein the measurable cell whitelist comprises at least one measurable cell within or beyond coverage of the first network device, and the unmeasurable cell blacklist comprises at least one unmeasurable cell.

26. The method according to any one of claims 23 to 25, wherein the method further comprises:
sending a first measurement report to the first network device, wherein the first measurement report is determined based on the second radio resource control reconfiguration message or the first radio resource control reconfiguration message.

27. The method according to any one of claims 23 to 26, wherein the method further comprises:
before receiving the second radio resource control reconfiguration message or the first radio resource control reconfiguration message from the first network device, sending a second measurement report to the first network device, wherein the second measurement report comprises information indicating signal quality obtained by the first terminal through measurement.

28. A communication apparatus, comprising:
a receiving module, configured to receive radio resource control release information sent by a first network device, wherein the radio resource control release information indicates to release a first radio resource control connection between a first terminal and the first network device; and
a sending module, configured to send first indication information to a second terminal, wherein the first terminal is a relay device for the second terminal to access the first network device, and the first indication information indicates at least one of the following: indicating to release a sidelink between the first terminal and the second terminal, indicating that the first radio resource control connection is released, or indicating that a state of the first radio resource control connection is a connection failure state.

29. The apparatus according to claim 28, wherein the apparatus further comprises an establishment module, wherein the establishment module is configured to establish a second radio resource control connection to a second network device, wherein the second radio resource control connection is used by the second terminal to access the second network device.

30. The apparatus according to claim 28 or 29, wherein the receiving module is further configured to receive second indication information sent by the second terminal, wherein the second indication information indicates to maintain the sidelink.

31. The apparatus according to claim 29, wherein the establishment module is specifically configured to: when the sidelink is not disconnected at a detection time point, establish an RRC connection to the second network device, wherein the detection time point comprises a time point of first duration since the first indication information is sent.

32. The apparatus according to any one of claims 28 to 31, wherein the radio resource control release information is received when the first terminal meets a handover condition and a session that belongs to the first terminal does not exist between the first terminal and the first network device.

33. The apparatus according to claim 28, wherein the apparatus further comprises a processing module, wherein the processing module is configured to determine a connection state of the first radio resource control connection; and
the sending module is further configured to send state indication information to the second terminal, wherein the state indication information comprises first state information, second state information, or third state information, the first state information indicates that the connection state is an establishing state, the second state information indicates that the connection state is an established state, and the third state information indicates that the connection state is an establishment failure state.

34. The apparatus according to claim 33, wherein the processing module is specifically configured to:
when the first terminal is being handed over, the first radio resource control connection is being established, or the first radio resource control connection on which a radio link failure occurs is being recovered, determine that the connection state is the establishing state; or
when the first terminal is handed over, the first radio resource control connection is established, or the first radio resource control connection on which radio link failure occurs is recovered, determine that the connection state is the established state; or
when the first terminal device fails to be handed over, the first radio resource control connection fails to be established, a radio link failure occurs on the first radio resource control connection, the first radio resource control connection on which the radio link failure occurs fails to be recovered, or the first radio resource control connection is released, determine that the connection state is the establishment failure state.

35. A communication apparatus, comprising:
a processing module, configured to determine a connection state of a first radio resource control connection between a first terminal and a first network device; and
a transceiver module, configured to send state indication information to a second terminal, wherein the state indication information comprises first state information, second state information, or third state information, the first state information indicates that the connection state is an establishing state, the second state information indicates that the connection state is an established state, and the third state information indicates that the connection state is an establishment failure state; and the first terminal is a relay device for the second terminal to access the first network device.

36. The apparatus according to claim 35, wherein the processing module is specifically configured to:
when the first terminal is being handed over, the first radio resource control connection is being established, or the first radio resource control connection on which a radio link failure occurs is being recovered, determine that the connection state is the establishing state; or
when the first terminal is handed over, the first radio resource control connection is established, or the first radio resource control connection on which a radio link failure occurs is recovered, determine that the connection state is the established state; or
when the first terminal device fails to be handed over, the first radio resource control connection fails to be established, a radio link failure occurs on the first radio resource control connection, the first radio resource control connection on which the radio link failure occurs fails to be recovered, or the first radio resource control connection is released, determine that the connection state is the establishment failure state.

37. The apparatus according to claim 35 or 36, wherein the processing module is specifically configured to: when radio resource control release information sent by the first network device is received, determine that the connection state is the establishment failure state, wherein the radio resource control release information indicates to release the first radio resource control connection.

38. The apparatus according to claim 37, wherein the processing module is further configured to establish a second radio resource control connection to a second network device, wherein the second radio resource control connection is used by the second terminal to access the second network device.

39. The apparatus according to claim 37 or 38, wherein the transceiver module is further configured to receive second indication information sent by the second terminal, wherein the second indication information indicates to maintain a sidelink.

40. The apparatus according to claim 38 or 39, wherein the processing module is further configured to: when the sidelink is not disconnected at a detection time point, establish an RRC connection to the second network device, wherein the detection time point comprises a time point of first duration since first indication information is sent.

41. The apparatus according to any one of claims 37 to 40, wherein the radio resource control release information is received when the first terminal meets a handover condition and a session that belongs to the first terminal does not exist between the first terminal and the first network device.

42. A communication apparatus, comprising:
a processing module, configured to determine that a first terminal meets a handover condition and a session that belongs to the first terminal does not exist between the first terminal and a first network device, wherein the first terminal is a relay device for a second terminal to access the first network device, and a first radio resource control connection exists between the first terminal and the first network device; and
a transceiver module, configured to send radio resource control release information to the first terminal, wherein the radio resource control release information indicates to release the first radio resource control connection.

43. The apparatus according to claim 42, wherein the transceiver module is further configured to receive a measurement report from the first terminal, wherein the measurement report comprises information indicating signal quality obtained by the first terminal through measurement; and
the processing module is further configured to determine, based on the measurement report, that the first terminal meets the handover condition.

44. The apparatus according to claim 42 or 43, wherein the processing module is further configured to release the first radio resource control connection between the first terminal and the first network device.

45. A communication apparatus, comprising:
a processing module, configured to determine whether a session that belongs to a first terminal exists between the first terminal and a first network device, wherein the first terminal is a relay device for a second terminal to access the first network device; and
a transceiver module, configured to: when the session that belongs to the first terminal does not exist, send a first radio resource control reconfiguration message to the first terminal, wherein the first radio resource control reconfiguration message comprises information indicating at least one unmeasurable cell and/or at least one measurable cell covered by the first network device.

46. The apparatus according to claim 45, wherein the transceiver module is further configured to:
when the session that belongs to the first terminal exists, send a second radio resource control reconfiguration message to the first terminal, wherein the second radio resource control reconfiguration message comprises information indicating a cell covered by the first network device and/or another cell, and the another cell is a cell other than the cell covered by the first network device.

47. The apparatus according to claim 46, wherein the second radio resource control reconfiguration message comprises any one or more of the following: at least one measurement event, a measurable cell whitelist, or an unmeasurable cell blacklist, wherein the measurable cell whitelist comprises at least one measurable cell within or beyond coverage of the first network device, and the unmeasurable cell blacklist comprises at least one unmeasurable cell.

48. The apparatus according to any one of claims 45 to 47, wherein the transceiver module is further configured to receive a first measurement report from the first terminal, wherein the first measurement report is determined based on the second radio resource control reconfiguration message or the first radio resource control reconfiguration message.

49. The apparatus according to any one of claims 45 to 48, wherein the transceiver module is further configured to: before it is determined that the session that belongs to the first terminal exists between the first terminal and the first network device, receive a second measurement report from the first terminal, wherein the second measurement report comprises information indicating signal quality obtained by the first terminal through measurement; and
the processing module is further configured to determine, based on the second measurement report, that the first terminal meets a handover condition.

50. A communication apparatus, comprising:
a transceiver module, configured to: when a session that belongs to a first terminal does not between the first terminal and a first network device, receive a first radio resource control reconfiguration message from the first network device, wherein the first radio resource control reconfiguration message comprises information indicating at least one unmeasurable cell and/or at least one measurable cell covered by the first network device, and the first terminal is a relay device for a second terminal to access the first network device; and
a processing module, configured to perform signal measurement based on the first radio resource control reconfiguration message.

51. The apparatus according to claim 50, wherein the transceiver module is further configured to: when the session that belongs to the first terminal exists, receive a second radio resource control reconfiguration message from the first network device, wherein the second radio resource control reconfiguration message comprises information indicating a cell covered by the first network device and/or another cell, and the another cell is a cell other than the cell covered by the first network device; and
the processing module is further configured to perform signal measurement based on the second radio resource control reconfiguration message.

52. The apparatus according to claim 51, wherein the second radio resource control reconfiguration message comprises any one or more of the following: at least one measurement event, a measurable cell whitelist, or an unmeasurable cell blacklist, wherein the measurable cell whitelist comprises at least one measurable cell within or beyond coverage of the first network device, and the unmeasurable cell blacklist comprises at least one unmeasurable cell.

53. The apparatus according to any one of claims 50 to 52, wherein the transceiver module is further configured to send a first measurement report to the first network device, wherein the first measurement report is determined based on the second radio resource control reconfiguration message or the first radio resource control reconfiguration message.

54. The apparatus according to any one of claims 50 to 53, wherein the transceiver module is further configured to: before receiving the second radio resource control reconfiguration message or the first radio resource control reconfiguration message from the first network device, send a second measurement report to the first network device, wherein the second measurement report comprises information indicating signal quality obtained by the first terminal through measurement.

55. A communication apparatus, wherein the communication apparatus comprises at least one processor and a communication interface, the communication interface is configured to perform information exchange between the communication apparatus and another communication apparatus, and when program instructions are executed by the at least one processor, the communication apparatus is enabled to perform the method according to any one of claims 1 to 14 or 23 to 27.

56. A communication apparatus, wherein the communication apparatus comprises at least one processor and a communication interface, the communication interface is configured to perform information exchange between the terminal and another communication apparatus, and when program instructions are executed by the at least one processor, the communication apparatus is enabled to perform the method according to any one of claims 15 to 17 or 18 to 22.

57. A computer program product, comprising program instructions, wherein when the program instructions are executed, the method according to any one of claims 1 to 27 is performed.

58. A computer-readable storage medium, wherein the computer-readable medium stores program code to be executed by a device, and when the program instructions are executed, the method according to any one of claims 1 to 27 is performed.

59. A chip, wherein the chip comprises at least one processor, and when program instructions are executed by the at least one processor, the method according to any one of claims 1 to 27 is performed.

60. A communication system, comprising the communication apparatus according to claim 55, the communication apparatus according to claim 56, and a second terminal.
